# EUROPEAN PATENT APPLICATION

(11) **EP 4 216 468 A1**
(43) Date of publication of application: **26.07.2023**
(21) Application number: 20953552.5
(22) Date of filing: 15.09.2020
(51) Int. Cl.: H04L 1/06

(54) **JOINT TRANSMISSION METHOD, TERMINAL DEVICE, TARGET NETWORK DEVICE, AND COOPERATIVE NETWORK DEVICE**

(71) Applicant: GUANGDONG OPPO MOBILE TELECOMMUNICATIONS CORP., LTD., Dongguan, Guangdong 523860 (CN)
(72) Inventor: DU, Haoyuan, Dongguan, Guangdong 523860 (CN); HOU, Ronghui, Dongguan, Guangdong 523860 (CN); WU, Zuomin, Dongguan, Guangdong 523860 (CN); SHI, Cong, Dongguan, Guangdong 523860 (CN); ZHANG, Jun, Dongguan, Guangdong 523860 (CN); YANG, Ning, Dongguan, Guangdong 523860 (CN); ZHANG, Zhi, Dongguan, Guangdong 523860 (CN)
(74) Representative: Novagraaf Technologies
(86) International application number: PCT/CN2020/115421
(87) International publication number: WO 2022/056691

(57) **Abstract**

A joint transmission method, a terminal device, a target network device, and a cooperative network device. The method comprises: a terminal device sends a first data frame to a target network device and at least one cooperative network device, wherein the cooperative network device is used for joint transmission of the first data frame; the terminal device determines, according to feedback of the target network device and/or feedback of the cooperative network device, whether to retransmit the first data frame.

## Description

### TECHNICAL FIELD

The embodiments of the present application relate to the field of communications, and in particular, to a joint transmission method, a terminal device, a target network device, and a coordinated network device.

### BACKGROUND

In some scenarios, the edge area of the Basic Service Set (BSS) is usually a signal overlapping area. For a station (STA) located in the signal overlapping area, the uplink signal sent by the station not only reaches an Access Point (AP) of the BSS where the station is located, but may also be received by a neighbor AP, which will cause uplink interference to the STA of the neighbor AP, resulting in a big difference in the data transmission rate and the system performance between the STA at the center of the BSS and the STA at the edge of the BSS. Therefore, how to improve the transmission performance of users at the edge of BSS is an urgent problem to be solved.

### SUMMARY

The embodiments of the present application provide a joint transmission method, a terminal device, a target network device, and a coordinated network device. By assisting the network device to perform joint transmission of data, it is beneficial to improve the probability of successful data transmission.

In a first aspect, a joint transmission method is provided, including: sending, by a terminal device, a probe request message, where the probe request message is used for detecting a network device around the terminal device that is capable of performing joint transmission; receiving, by the terminal device, at least one probe response message sent by at least one network device.

In a second aspect, a joint transmission method is provided, including: sending, by a terminal device, a first data frame to a target network device and at least one coordinated network device, the coordinated network device being used for joint transmission of the first data frame; determining, by the terminal device, whether to retransmit the first data frame according to a feedback from the target network device and/or a feedback from the coordinated network device.

In a third aspect, a joint transmission method is provided, including: receiving, by a network device, a probe request message sent by a terminal device, where the probe request message is used for detecting a network device around the terminal device that is capable of performing joint transmission, where the probe request message includes a transmission requirement parameter of the terminal device; if the network device meets the transmission requirement parameter of the terminal device, sending a probe response message to the terminal device.

In a fourth aspect, a joint transmission method is provided, including: receiving, by a target network device, a first data frame sent by a terminal device, where the first data frame includes first indication information, and the first indication information is used for indicating that the first data frame is transmitted in a joint transmission manner; performing, by the target network device, joint transmission of the first data frame through at least one coordinated network device.

In a fifth aspect, a joint transmission method is provided, including: receiving, by a first coordinated network device, a first data frame sent by a terminal device, where the first data frame includes first indication information, and the first indication information is used for indicating that the first data frame is transmitted in a joint transmission manner; performing, by the first coordinated network device, joint transmission of the first data frame.

In a sixth aspect, a terminal device is provided for executing the method in the first aspect or any possible implementation manner of the first aspect. Specifically, the terminal device includes a unit for executing the method in any one of the implementation manners of the first aspect to the second aspect.

In a seventh aspect, a network device is provided for executing the method in any possible implementation manner of the third aspect to the fifth aspect. Specifically, the network device includes a unit for executing the method in any possible implementation manner of the third aspect to the fifth aspect.

In an eighth aspect, a terminal device is provided, and the terminal device includes: a processor and a memory. The memory is used for storing a computer program, and the processor is used for calling and running the computer program stored in the memory to execute the method in any one of the implementation manners of the first aspect to the second aspect.

In a ninth aspect, a network device is provided, and the network device includes: a processor and a memory. The memory is used for storing a computer program, and the processor is used for calling and running the computer program stored in the memory to execute the method in any possible implementation manner of the third aspect to the fifth aspect.

In a tenth aspect, a chip is provided for implementing the method in any one of the above-mentioned first to fifth aspects or each implementation manner thereof. Specifically, the chip includes: a processor for calling and running a computer program from a memory, so that a device installed with the chip executes the method in any one of the above-mentioned first to fifth aspects or each implementation thereof.

In an eleventh aspect, a computer-readable storage medium is provided for storing a computer program, the computer program causing a computer to execute the method in any one of the above-mentioned first to fifth aspects or each implementation thereof.

In a twelfth aspect, a computer program product is provided, including computer program instructions, the computer program instructions causing a computer to perform the method in any one of the above-mentioned first to fifth aspects or each implementation thereof.

In a thirteenth aspect, a computer program is provided. When the computer program runs on a computer, the computer is caused to execute the method in any one of the above-mentioned first to fifth aspects or each implementation thereof.

Based on the above technical solutions, the terminal device can jointly send the data frame to the target network device through the coordinated network device, so that the probability of successful data transmission can be improved.

### BRIEF DESCRIPTION OF THE DRAWINGS

FIG. 1 is a schematic diagram of an application scenario provided by an embodiment of the present application.
FIG. 2 is a schematic diagram of a joint transmission method provided by an embodiment of the present application.
FIG. 3 is a schematic diagram of an execution process of the embodiment shown in FIG. 2.
FIG. 4 is an overall flow chart of the joint transmission method of the embodiment shown in FIG. 2.
FIG. 5 is a schematic diagram of another joint transmission method provided by an embodiment of the present application.
FIGs. 6 to 15 are specific examples of the joint transmission method according to the embodiments of the present application.
FIGs. 16 to 18 are overall flow charts of a joint transmission method based on three feedback manners.
FIGs. 19 to 22 are schematic diagrams of frame formats of related frames according to the embodiments of the present application.
FIG. 23 is a schematic block diagram of a functional entity of a target network device provided by an embodiment of the present application.
FIG. 24 is a schematic block diagram of functional entities of a coordinated network device provided by an embodiment of the present application.
FIG. 25 is a schematic block diagram of functional entities of a terminal device provided by an embodiment of the present application.
FIG. 26 is a schematic block diagram of a terminal device provided by an embodiment of the present application.
FIG. 27 is a schematic block diagram of a network device provided by an embodiment of the present application.
FIG. 28 is a schematic block diagram of another terminal device provided by an embodiment of the present application.
FIG. 29 is a schematic block diagram of another network device provided by an embodiment of the present application.
FIG. 30 is a schematic block diagram of still another network device provided by an embodiment of the present application.
FIG. 31 is a schematic block diagram of a communication device provided by an embodiment of the present application.
FIG. 32 is a schematic block diagram of a chip provided by an embodiment of the present application.
FIG. 33 is a schematic block diagram of a communication system provided by an embodiment of the present application.

### DETAILED DESCRIPTION

The technical solutions in the embodiments of the present application will be described below with reference to the accompanying drawings in the embodiments of the present application. Obviously, the described embodiments are part of the embodiments of the present application, not all of the embodiments. With regard to the embodiments in the present application, all other embodiments obtained by persons of ordinary skill in the art without creative efforts shall fall within the protection scope of the present application.

The technical solutions of the embodiments of the present application can be applied to various communication systems, for example: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an Advanced Long Term Evolution (LTE-A) system, a New Radio (NR) system, an evolution system of NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), a fifth-generation communication (5th-Generation, 5G) system or other communication systems, etc.

Generally speaking, traditional communication systems support a limited number of connections, which are easy to be implemented. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. The embodiments of the present application can also be applied to these communication systems.

Optionally, the communication system in the embodiments of the present application may be applied to a Carrier Aggregation (CA) scenario, a Dual Connectivity (DC) scenario, or a Standalone (SA) network distribution scenario.

Optionally, the communication system in the embodiments of the present application may be applied to an unlicensed spectrum, where the unlicensed spectrum may also be considered as a shared spectrum; or, the communication system in the embodiments of the present application may also be applied to a licensed spectrum, where the licensed spectrum may also be considered as an unshared spectrum.

The embodiments of the present application describe various embodiments in conjunction with network device and terminal device, where the terminal device may also be referred to as User Equipment (UE), an access terminal, a subscriber unit, a subscriber station, a mobile station, a mobile, a remote station, a remote terminal, a mobile device, a user terminal, a terminal, a wireless communication device, a user agent or a user apparatus, etc.

The terminal device may be a station (STATION, ST) in the WLAN, may be a cellular phone, a cordless phone, a Session Initiation Protocol (SIP) phone, a Wireless Local Loop (WLL) station, a Personal Digital Assistant (PDA) device, a handheld device, a computing device with wireless communication capabilities or other processing devices, in-vehicle devices, wearable devices connected to wireless modems, a terminal device in the next-generation communication systems such as NR networks, or a terminal device in future evolved Public Land Mobile Network (PLMN) network, etc.

In the embodiments of the present application, the terminal device may be deployed on land, including indoor or outdoor, handheld, wearable, or vehicle-mounted; it may also be deployed on water (such as ships, etc.); it may also be deployed in the air (such as airplanes, balloons, and satellites).

In the embodiments of the present application, the terminal device may be a mobile phone, a tablet computer (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or a wireless terminal device in smart home, etc.

As an example and not a limitation, in the embodiments of the present application, the terminal device may also be a wearable device. The wearable device may also be called a wearable smart device, which is a general term for wearable devices which are developed by intelligently designing daily wear by applying wearable technology, such as glasses, gloves, watches, clothing and shoes. The wearable device is a portable device that is worn directly on the body, or integrated into the user's clothing or accessories. The wearable device is not only a hardware device, but also achieves powerful functions through software support, data interaction, and cloud interaction. Generalized wearable smart devices include full-featured and large-sized devices that can achieve complete or partial functions without relying on smartphones, such as smart watches or smart glasses, and devices that focus only on a certain type of application function and need to be used in conjunction with other devices (e.g., smartphones), such as various types of smart bracelets and smart jewelry for physical sign monitoring.

In the embodiments of the present application, the network device may be a device for communicating with a mobile device, and the network device may be an Access Point (AP) in WLAN, or a base station (Base Transceiver Station, BTS) in GSM or CDMA , it may also be a base station (NodeB, NB) in WCDMA, it may also be an evolutional base station (Evolutional Node B, eNB or eNodeB) in LTE, or a relay station or access point, or in-vehicle device, a wearable device and a network device (gNB) in the NR network or a network device in a future evolutional PLMN network or a network device in the NTN network, etc.

As an example and not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, etc. Optionally, the network device may also be a base station set in a location such as land or water.

In the embodiments of the present application, the network device may provide services for a cell, and the terminal device communicates with the network device through transmission resources (for example, frequency domain resources, or spectrum resources) used by the cell, and the cell may be a a cell corresponding to the network device (for example, the base station), the cell may belong to the macro base station, or it may belong to the base station corresponding to the small cell. The small cell here may include a Femto cell, a Micro cell, a Pico cell, a Femto cell, etc. These small cells have the characteristics of small coverage and low transmission power, and are suitable for providing high-speed data transmission services.

It should be understood that the terms "system" and "network" are often used interchangeably herein. The term "and/or" in the present disclosure is only an association relationship for describing the associated objects, indicating that there may be three kinds of relationships, for example, A and/or B may mean the following three cases: A exists alone, A and B exist at the same time, and B exists alone. In addition, the character "/" in the present disclosure generally indicates that the related objects have an "or" relationship.

It should be understood that the "indication" mentioned in the embodiments of the present application may be a direct indication, an indirect indication, or may represent an associated relationship. For example, if A indicates B, it may represent that A directly indicates B, for example, B can be obtained through A; or it may represent that A indicates B indirectly, for example, A indicates C, and B can be obtained through C; or it may represent that there is an associated relationship between A and B.

In the description of the embodiments of the present application, the term "corresponding" may represent that there is a direct or indirect corresponding relationship between two things, or may represent that there is an associated relationship between the two things, or may represent relationships of indicating and being indicated, configuring and being configured, etc.

In some scenarios, the terminal device is a Station (STA), and the network device may be an Access Point (AP). For a STA located in a signal Overlapping Basic Service Set (OBSS), its uplink signal not only reaches the AP in the Basic Service Set (BSS) where it is located, but may also be received by a neighbor AP, which will cause uplink interference to the STA of the neighbor AP. Usually, there are many STAs in the service area of one AP, and the uplink interference from multiple adjacent BSSs causes the uplink transmission quality of the STAs of the primary BSS to drop sharply.

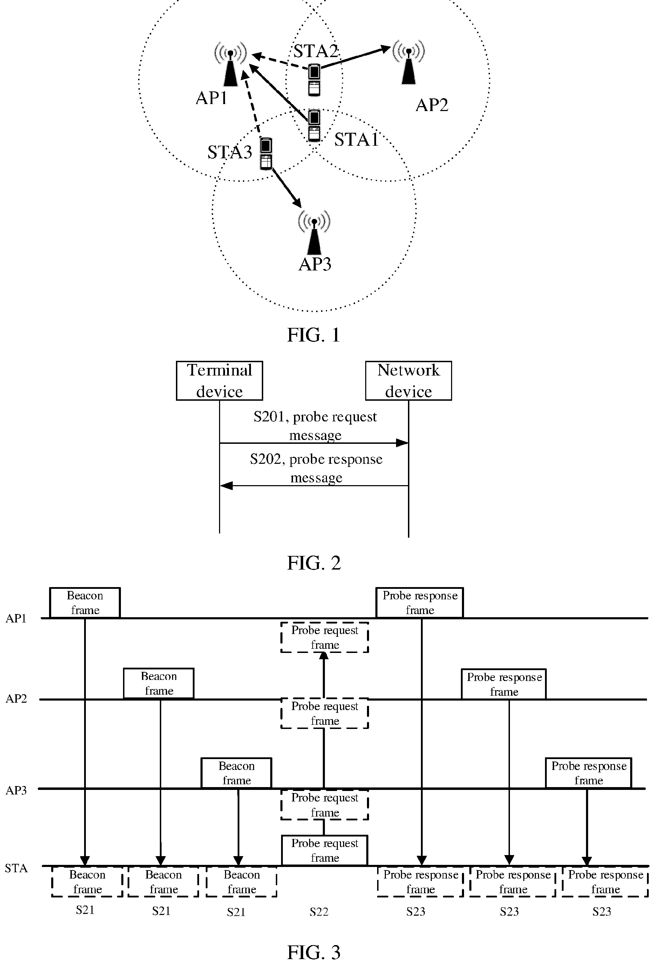

As shown in FIG. 1, the solid line is the normally received signal, and the dotted line is the interference signal, STA1, STA2, and STA3 are respectively associated with AP1, AP2, and AP3 and transmit data. Among them, STA2 and STA3 are not only within the service range of AP2 and AP3, but also within the service range of AP1. When STA2 and STA3 send uplink signals to AP2 and AP3 respectively, it will cause interference to the uplink signal sent by STA1 to AP1, so that AP1 cannot normally receive the uplink signal sent by STA1. This inter-BSS interference problem seriously affects the performance of the communication system, which makes the STA at the center of the BSS and the STA at the edge of the BSS have a big difference in the data transmission rate and system performance, so that the quality of service enjoyed by the users has a great volatility. Therefore, how to improve the transmission performance of the users at the edge of BSS is an urgent problem to be solved.

In view of this, the present application provides a joint transmission method, which can perform data forwarding by cooperating with a target network device through a coordinated network device, thereby increasing the probability of successful data reception by the target network device.

The joint transmission method according to the embodiments of the present application is described in detail below with reference to the first embodiment and the second embodiment.

The first embodiment is a device discovery process for joint transmission, or in other words, an establishment process of joint transmission group, and the second embodiment is notification of the joint transmission group and transmission process. It should be understood that the first embodiment and the second embodiment may be implemented independently or in combination. For example, the coordinated network device that can be used for joint transmission is determined through the first embodiment, and the coordinated network device is further used for joint transmission according to the method described in the second embodiment.

### First embodiment:

FIG. 2 is a schematic interaction diagram of a joint transmission method 200 provided by an embodiment of the present application. As shown in FIG. 2, the method 200 may include at least some of the following contents.

In S201, a terminal device sends a probe request message, where the probe request message is used for detecting a network device around the terminal device that is capable of performing joint transmission.

In S202, the terminal device receives a probe response message sent by at least one network device.

Before performing joint transmission, the terminal device first discovers a network device with joint transmission function. Specifically, the terminal device sends a probe request message, and selects a network device that can be used for joint transmission according to the probe response message replied by the network device.

It should be noted that the network device that performs the joint transmission function may be called a coordinated network device. When the terminal device sends an uplink data frame to a target network device, the coordinated network device may assist the target network device to send the uplink data frame to the target network device, and the specific joint transmission process may be referred to the related description of the second embodiment, which will not be repeated here.

In some embodiments, the terminal device is a STA, and the network device is an AP. Alternatively, the terminal device and the network device may be of other types described in the foregoing embodiments, and the present application is not limited thereto.

In some embodiments, the probe request message is a probe request frame, and the probe response message is a probe response frame.

Optionally, the terminal device is in a signal overlapping area, for example, the terminal device may be a STA in the OBSS. In some embodiments, if the STA receives beacon frames sent by a plurality of APs, it indicates that the STA is in a signal overlapping area. In order to avoid subsequent data transmission failures, the STA determines that the uplink joint transmission function needs to be enabled. In this case, the STA may send a probe request frame to detect the surrounding AP(s) with the joint transmission function.

Optionally, the probe request message may include a transmission requirement parameter of the terminal device.

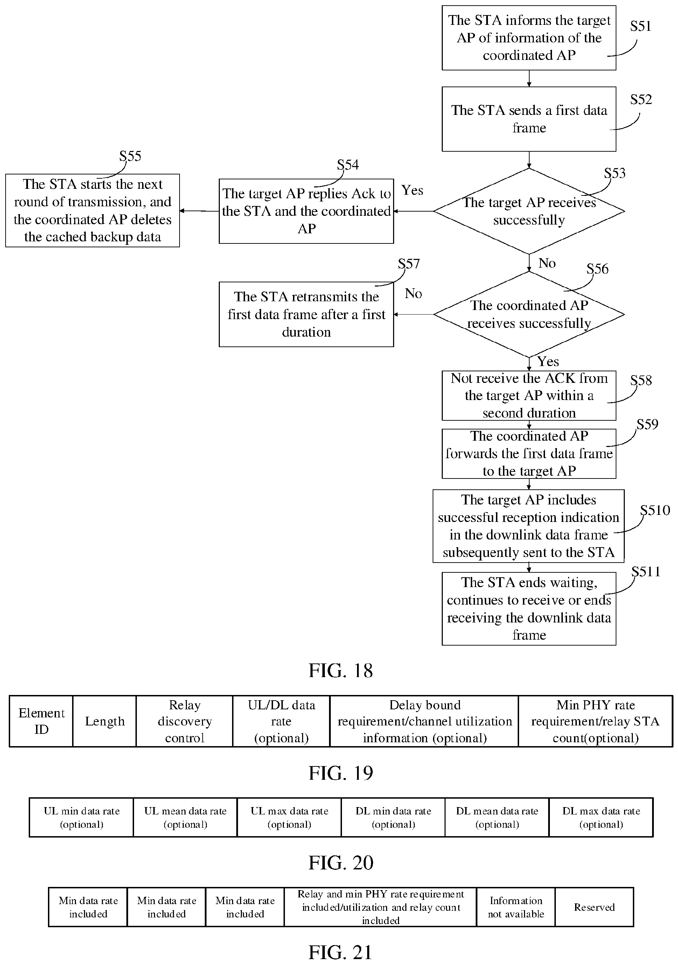

For example, if the probe request message is a probe request frame, a relay discovery element field in the probe request frame includes the transmission requirement parameter of the terminal device. FIG. 19 shows a typical format of the Relay Discovery element in the Probe Request frame and the Probe Response frame, and FIG. 20 and FIG. 21 show a typical format of an uplink/downlink data rate (UL/DL Data Rate) field and a Relay Discovery Control field in the Relay Discovery element.

As an example and not a limitation, the transmission requirement parameter of the terminal device includes at least one of the following: a delay requirement, a channel utilization requirement and a transmission rate requirement. The transmission rate requirement may include, for example, rate-related information in FIG. 20 or FIG. 21.

The network device that receives the probe request message may determine whether its own transmission capability meets the transmission requirement according to the transmission requirement parameter of the terminal device in the probe request message. If satisfied, it indicates that the network device can be used as the coordinated network device for joint transmission of the terminal device. In other words, it can be used as a coordinated network device in the joint transmission group of the terminal device. In this case, the network device may send a probe response message to the terminal device.

Optionally, the probe response message may include a transmission capability parameter of the network device, for example, an uplink transmission rate, channel utilization information, the number of terminal devices connected to the network device, etc., which is not limited by the present application.

As an example, if the probe response message is a probe response frame, the Relay Discovery element field in the probe response frame includes the transmission capability parameter of the network device.

In some scenarios, some network devices may enable the joint transmission function, but they are associated with too many other devices or are already in the joint transmission group of other terminal devices, or the network device does not meet the transmission requirement of the terminal device, such network device may not reply the probe response message, or reply a probe response message including unavailable information. For example, if the probe response message is a probe response frame, a field of unavailable information may be added to the relay discovery element field in the probe response frame. That is to say, although the network device meets the transmission requirement of the terminal device, the network device needs to reserve resources for other associated terminal device(s). Therefore, the network device can directly reply the probe response message including the unavailable information, thus it can be avoided that the terminal device takes it as a candidate coordinated network device when determining whether there is an available coordinated network device nearby.

If the terminal device receives the probe response message sent by one or more network devices, the terminal device may determine the available coordinated network devices around it according to the message content in the probe response message replied by the network device.

For example, if the probe response message sent by a certain network device includes the transmission capability parameter of the network device, and the transmission capability parameter of the network device meets the transmission requirement of the terminal device, the terminal device can determine this network device as the coordinated network device available for joint transmission. Alternatively, if the probe response message includes the unavailable information, the network device is not regarded as a coordinated network device available for joint transmission.

Further, the terminal device may record the information of available coordinated network device(s). So far, it can be considered that the establishment of the joint transmission group is completed, and the subsequent joint transmission can be started.

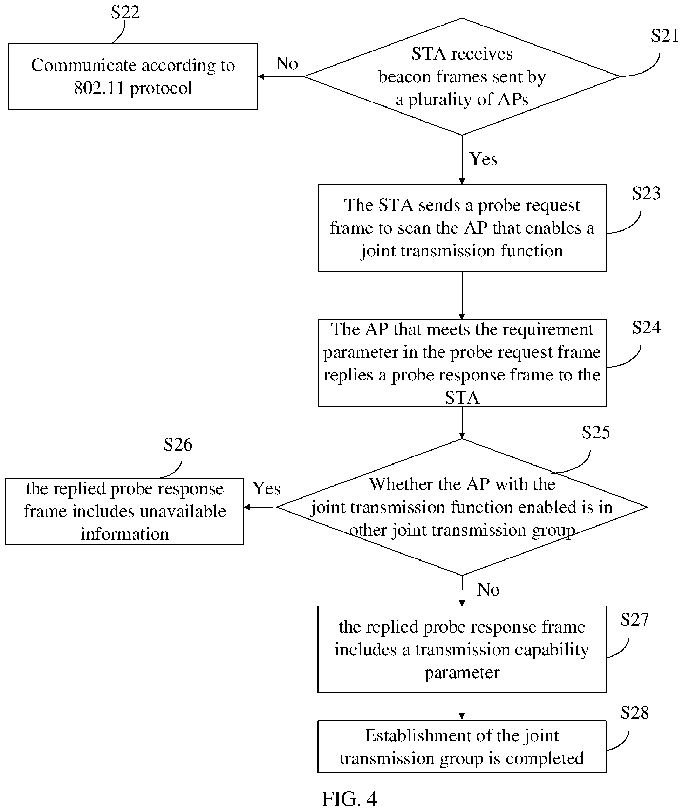

With reference to FIG. 3 and FIG. 4, a process of establishing a joint transmission group is described by taking the terminal device as an STA and the network device as an AP as an example. As shown in FIGs. 3 and 4, the process may specifically include the following steps.

In S21, the STA receives beacon frames sent by a plurality of APs.

In this case, it means that the STA is in a signal overlapping area. In order to avoid subsequent data transmission failure, the STA determines that the uplink joint transmission function needs to be enabled.

In other cases, if the STA does not receive the beacon frames sent by a plurality of APs, indicating that the STA is not in the signal overlapping area, then in S22, the STA may communicate with the AP by using an existing communication protocol (e.g., 802.11 protocol).

In S23, the STA sends a probe request frame to detect whether there is an AP around the STA which enables the joint transmission function and can perform joint transmission. The relay discovery element field in the probe request frame may include the transmission requirement parameter of the STA, such as a delay requirement, channel utilization information, and a minimum transmission rate.

In S24, if the probe request frame is received and the AP that enables the joint transmission function meets the transmission requirement of the STA, indicating that the AP is qualified to become a coordinated AP in the joint transmission group, the AP can reply a probe response frame to the STA. The relay discovery element field in the probe response frame may contain the transmission capability parameter of the AP.

In S25, the AP with the joint transmission function enabled determines whether it is in other joint transmission group(s).

If it is in other joint transmission group(s), S26 is performed; if it is not in other joint transmission group, S27 is performed.

In S26, the replied probe response frame includes the unavailable information.

In S27, the replied probe response frame includes the transmission capability parameter of the AP.

In S28, after the STA receives the probe response frame including the transmission capability parameter sent by one or more APs, the STA determines that there is AP(s) around that can forward data as a coordinated AP, and records information of available AP(s).

So far, the establishment of the joint transmission group is completed, and subsequent joint transmission can be started.

### Second embodiment:

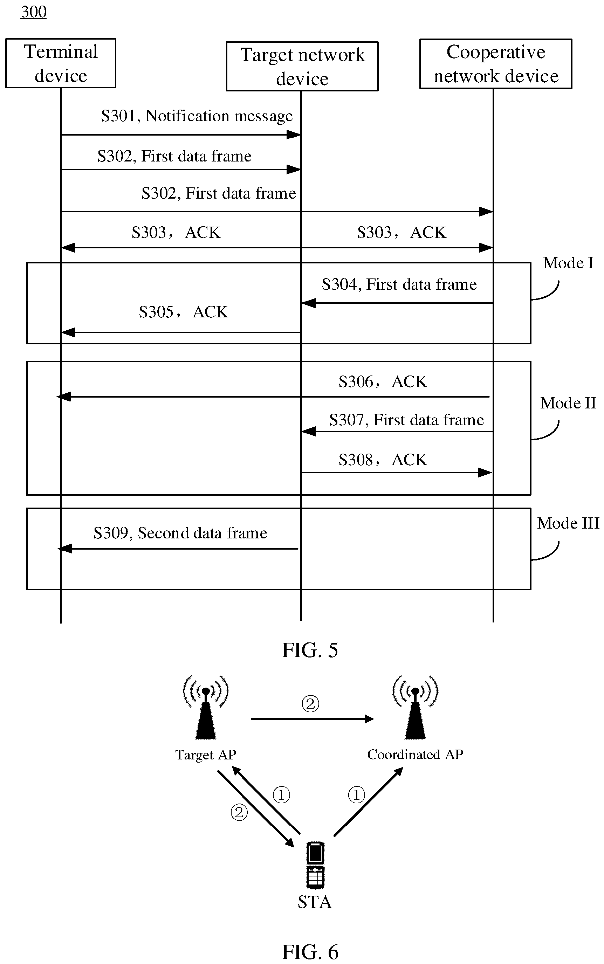

FIG. 5 is a schematic interaction diagram of another joint transmission method 300 provided by an embodiment of the present application. As shown in FIG. 5, the method 300 may include at least some of the following contents.

In S302, the terminal device sends a first data frame to a target network device and at least one coordinated network device, where the coordinated network device is used for joint transmission of the first data frame.

In S303, the terminal device determines whether to retransmit the first data frame according to a feedback of the target network device and/or a feedback of the coordinated network device.

The target network device is a target receiver of the first data frame, and the coordinated network device is used for forwarding the first data frame to the target network device, that is, assisting the terminal device to transmit the first data frame.

It should be understood that the embodiments of the present application do not limit the number of the coordinated network devices, for example, there may be one or more than one coordinated network devices, which is not limited in the present application.

Optionally, before S302, the method 300 further includes the following step.

In S301, the terminal device sends a notification message to the target network device, where the notification message is used for notifying the target network device of information about the coordinated network device, that is, the information of the coordinated network device(s) in the joint transmission group.

Specifically, before the joint transmission is performed, the terminal device may send a notification message to the target network device according to the established joint transmission group, informing the target network device of the information of the coordinated network device that can be used for the joint transmission.

In some embodiments, the terminal device is a STA, and the target network device and the coordinated network device are both APs. Alternatively, the terminal device and the network device may also be other types described in the foregoing embodiments, which is not limited by the present application.

Optionally, the terminal device is in a signal overlapping area. For example, the terminal device may be a STA in an OBSS, the target network device may be an AP of a BSS where the terminal device is located, and the coordinated network device may be an AP of a neighboring BSS. In this case, the target network device may be referred to as a target AP, and the coordinated network device may be referred to as a coordinated AP.

Optionally, the notification message may be an Announce frame, that is, the target AP may be notified of the information of the coordinated AP through the announcement frame.

Optionally, the first data frame includes first indication information, where the first indication information is used for indicating that the first data frame is transmitted in a joint transmission manner. The receiving end of the first data frame is according to the first indication information.

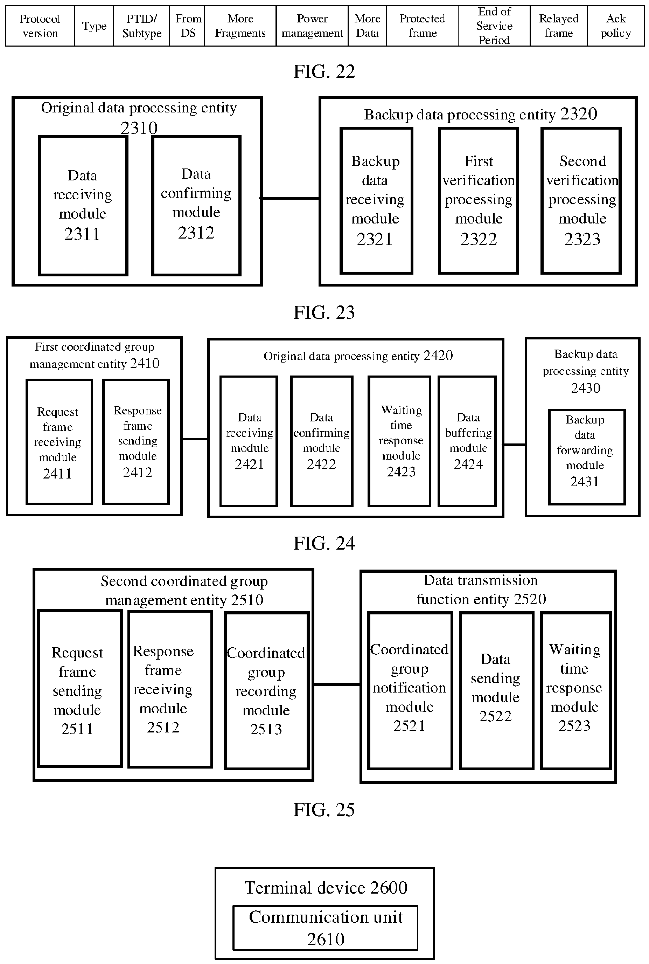

Optionally, the first indication information is included in a Relayed Frame field in a Frame Control field of the first data frame. For example, a value of 1 in the relay frame field indicates that the first data frame is transmitted in a joint transmission manner, and a value of 0 in the relay frame field indicates that the first data frame is not transmitted in a joint transmission manner. FIG. 22 is an example format of a frame control field of a data frame.

Optionally, the first data frame includes second indication information, where the second indication information is used for indicating a feedback manner of the first data frame. Optionally, the second indication information is included in a feedback policy (ACK policy) field in a Frame Control field of the first data frame.

As an example, the second indication information indicates a first feedback manner, or called an explicit ACK feedback manner. For example, if the first data frame is received correctly, an ACK is fed back; if it is not received correctly, it waits to be forwarded by the coordinated network device, and when it is received correctly, an ACK is fed back, and if it is not received correctly, no feedback is given.

As another example, the second indication information indicates a second feedback manner, or called an implicit ACK feedback manner. For example, if the first data frame is received correctly, a reception success indication is sent through a subsequent downlink data frame; if it is not received correctly, it waits to be forwarded by the coordinated network device, and when it is received correctly, the reception success indication is sent through the subsequent downlink data frame, and if it is not received correctly, no feedback is given.

It should be noted that in the embodiments of the present application, after the terminal device sends the first data frame to the target network device and the coordinated network device, it needs to wait for a first duration. If a feedback of successful data reception sent by the target network device is received within the first duration, waiting is ended, and the next round of transmission is started or the transmission is ended. After the coordinated network device receives the first data frame of the terminal device, it needs to wait for a second duration. If the ACK sent by the target network device is received within the second duration, it means that the target network device has successfully received the data. In this case, the cached first data frame may be cleared. The first duration is greater than the second duration.

Optionally, the first duration may be predefined or configured by the network device.

Optionally, the second duration may be predefined or configured by the network device.

When the target network device receives the first data frame, it may enable the joint transmission function, further according to the reception of the first data frame, it waits for the forwarding of the coordinated network device, and performs feedback of the first data frame according to the indicated feedback manner.

Hereinafter, the subsequent joint transmission mechanism will be described in conjunction with the reception of the first data frame by the coordinated network device and the target network device.

Case 1: The target network device successfully receives the first data frame.

Then in S303, the target network device sends an ACK to the terminal device and all coordinated network devices.

If the feedback manner indicated by the second indication information is an implicit ACK feedback manner, the target network device may send a second data frame to the terminal device, and the second data frame includes a successful reception indication of the first data frame.

Further, if the terminal device receives an ACK or a second data frame including a successful reception indication within the first duration, it can be determined that retransmission of the first data frame is not required, then the terminal device may start the next round of transmission, and the coordinated network device may clear the cached first data frame.

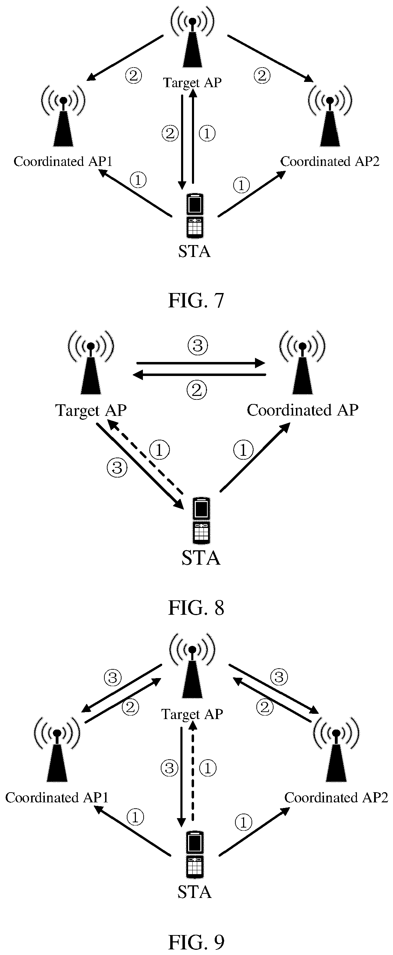

With reference to FIG. 6 and FIG. 7, the data transmission process in Case 1 is described by taking the terminal device as a STA and the coordinated network device including one AP and two APs as examples.

As shown in FIG. 6, the following steps may be included.

In step 1: the STA sends a first data frame to a target AP and a coordinated AP, and waits for a first duration.

Then the target AP successfully receives the first data frame.

In step 2: the target AP replies ACK to the STA and the coordinated AP, indicating that the target AP correctly receives the first data frame.

After that, the STA starts the next round of transmission, and the coordinated AP clears the backup data in the buffer area.

As shown in FIG. 7, the following steps may be included.

In step 1: the STA sends the first data frame to the target AP, the coordinated AP1 and the coordinated AP2, and waits for the first duration.

Then the target AP successfully receives the first data frame.

In step 2: the target AP replies ACK to the STA, the coordinated AP1 and the coordinated AP2, indicating that the target AP correctly receives the first data frame. After that, the STA starts the next round of transmission, and the coordinated APs clears the backup data in the buffer area.

Case 2: The target network device fails to receive the first data frame, and the coordinated network device successfully receives the first data frame.

The following operations will be described below in combination with three feedback manners. For the convenience of distinction and description, the three feedback manners are respectively denoted as a first explicit ACK feedback manner, a second explicit ACK feedback manner and an implicit feedback manner.

### First manner: the first explicit ACK feedback manner

If the target network device fails to receive the first data frame, the target network device does not send ACK to the terminal device or the coordinated network device. If the coordinated network device does not receive the ACK sent by the target network device within the second duration, it is considered that the target network device fails to receive the data.

Further, in S304, the coordinated network device that successfully receives the first data frame forwards the first data frame to the target network device. Specifically, a Request to send (RTS)/Clear to send (CTS) mechanism may be used to protect the forwarded data frame during forwarding.

If the target network device successfully receives the first data frame forwarded by the coordinated network device, in S305, the target network device sends an ACK to the terminal device and all the coordinated network devices.

If the terminal device receives the ACK from the target network device within the first duration, it is determined that retransmission of the first data frame is not required, then the next round of transmission may be started, and the coordinated network device may clear the cached first data frame.

In combination with FIG. 8 and FIG. 9, the data transmission process in the first manner is described by taking the terminal device as a STA and the coordinated network device including one AP and two APs as examples.

As shown in FIG. 8, the following steps may be included.

In step 1: the STA sends the first data frame to the target AP and the coordinated AP, and waits for the first duration.

After that, the target AP fails to receive the data, and the coordinated AP successfully receives the data. Then the target AP does not send ACK to the STA or the coordinated AP, and the coordinated AP does not receive the ACK of the target AP within the second duration, then it is considered that the target AP fails to receive.

In step 2: the coordinated AP forwards the first data frame to the target AP. Specifically, the coordinated AP may use the RTS/CTS mechanism to protect the first data frame when forwarding the first data frame.

In step 3: after the target AP successfully receives the first data frame, it sends an ACK to the coordinated AP and the STA.

Further, the coordinated AP clears the backup data in the buffer area, and the STA starts the next round of transmission.

As shown in FIG. 9, the following steps may be included.

In step 1: the STA sends the first data frame to the target AP, the coordinated AP1 and the coordinated AP2, and waits for the first duration.

After that, the target AP fails to receive the data, and the coordinated AP1 and the coordinated AP2 receive it successfully. Then the target AP does not send an ACK to the STA or any coordinated AP, and the coordinated AP1 and the coordinated AP2 do not receive the ACK from the target AP within the second duration, then it is considered that the target AP fails to receive.

In step 2: the coordinated AP1 and the coordinated AP2 forward the first data frame to the target AP. Specifically, when the coordinated AP1 forwards the first data frame, the RTS/CTS mechanism may be used to protect the first data frame.

After that, the target AP successfully receives the first data frame.

In step 3: the target AP sends ACK to all coordinated APs and STA.

Further, all coordinated APs clear the backup data in the buffer area, and the STA starts the next round of transmission.

### Second manner: the second explicit ACK feedback manner

If the target network device fails to receive the first data frame, the target network device does not send ACK to the terminal device or the coordinated network device. If the coordinated network device does not receive the ACK sent by the target network device within the second duration, it is considered that the target network device fails to receive the data.

In S306, the coordinated network device sends an ACK to the terminal device. If the terminal device receives the ACK of the coordinated network device within the first duration, it is determined that retransmission of the first data frame is not required, and further, the next round of transmission may be started.

Further, in S307, the coordinated network device that successfully receives the first data frame forwards the first data frame to the target network device. Specifically, the RTS/CTS mechanism may be used to protect the forwarded data frame during forwarding.

If the target network device successfully receives the first data frame, in S308, the target network device sends an ACK to all coordinated network devices. Further, the coordinated network device may clear the cached first data frame.

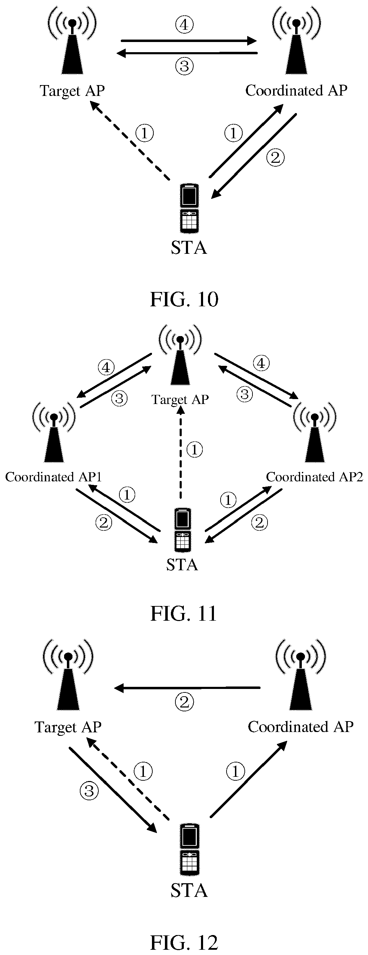

With reference to FIG. 10 and FIG. 11, the data transmission process in the second manner is described by taking the terminal device as a STA and the coordinated network device including one AP and two APs as examples.

As shown in FIG. 10, the following steps may be included.

In step 1: the STA sends the first data frame to the target AP and the coordinated AP, and waits for the first duration.

After that, the target AP fails to receive data, and the coordinated AP receives it successfully. Then, the target AP does not send ACK to the STA or the coordinated AP, and the coordinated AP does not receive the ACK from the target AP within the second duration, then it is considered that the target AP fails to receive.

In step 2: the coordinated AP sends an ACK to the STA. The STA starts the next round of transmission.

In step 3: the coordinated AP forwards the first data frame to the target AP. Specifically, the RTS/CTS mechanism may be used to protect the forwarded data frame during forwarding. After that, the target AP successfully receives the first data frame forwarded by the coordinated AP.

In step 4: the target AP sends an ACK to the coordinated AP. Further, the coordinated AP clears the backup data in the buffer area.

As shown in FIG. 11, the following steps may be included.

In step 1: the STA sends the first data frame to the target AP, the coordinated AP1 and the coordinated AP2, and waits for the first duration.

After that, the target AP fails to receive the data, and the coordinated AP1 and the coordinated AP1 receive the data successfully. Then the target AP does not send an ACK to the STA or any coordinated AP, and the coordinated AP1 and the coordinated AP2 do not receive the ACK from the target AP within the second duration, then it is considered that the target AP fails to receive.

In step 2: the coordinated AP1 and the coordinated AP2 send an ACK to the STA. The STA starts the next round of transmission.

In step 3: the coordinated AP1 and the coordinated AP2 forward the first data frame to the target AP.

In step 4: the target AP sends an ACK to all coordinated APs.

Further, the coordinated APs clear the backup data in the buffer area.

It should be noted that the above two explicit ACK feedback manners have their own advantages. In terms of data transmission reliability, the first explicit ACK feedback manner adopts the method of forwarding first and then confirming. If the coordinated network device fails to forward to the target network device, the target network device cannot receive the correct data and does not send an ACK to the terminal device for confirmation, then the terminal device does not receive the ACK within the specified time, and may retransmit the data, which can improve the reliability of transmission. The second explicit ACK feedback manner adopts the method of confirming first and then forwarding. If the coordinated network device fails to forward to the target network device, because the coordinated network device has already replied ACK to the terminal device and the terminal device has started the next round of transmission, then the data that fails to be received will not be retransmitted, causing the data to be lost. Therefore, the transmission reliability of the first explicit ACK feedback manner is higher than that of the second explicit ACK feedback manner.

In terms of transmission efficiency, the first explicit ACK feedback manner adopts the method of forwarding first and then confirming, which will make the waiting time of the terminal device longer. The second explicit ACK feedback manner adopts the method of confirming first and then forwarding, so that the waiting time of the terminal device becomes shorter. Therefore, the transmission efficiency of the second explicit ACK feedback manner is higher than that of the first explicit ACK feedback manner. In the specific implementation, which feedback manner to use can be selected according to actual needs.

### Third manner: implicit ACK feedback manner

Specifically, in the case that the target network device correctly receives the first data frame, the downlink data frame sent to the terminal device subsequently may carry the indication of successful reception of the first data frame. In the case that the target network device does not correctly receive the first data frame, no feedback is provided.

The third manner may be applied to the foregoing case 1 and case 2, and case 2 is taken as an example for specific description.

If the target network device fails to receive the first data frame sent by the terminal device, the target network device does not send an ACK to the terminal device or the coordinated network device. If the coordinated network device does not receive the ACK sent by the target network device within the second duration, it is considered that the target network device fails to receive data.

Further, the coordinated network device that successfully receives the first data frame forwards the first data frame to the target network device. And, the coordinated network device clears the cached first data frame. Specifically, the RTS/CTS mechanism can be used to protect the forwarded data frame during forwarding.

If the target network device successfully receives the first data frame forwarded by the coordinated network device, in S309, the target network device sends a second data frame to the terminal device, and the second data frame is a downlink data frame sent by the target network device subsequently to the terminal device, where the second data frame includes a successful reception indication of the first data frame.

Further, if the terminal device receives the downlink data frame including the successful reception indication of the first data frame within the first duration, it is determined that retransmission of the first data frame is not required, and the next round of transmission is further started.

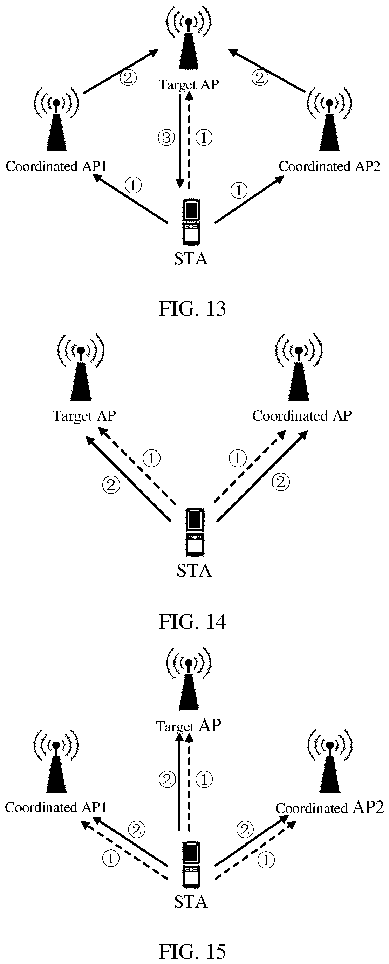

With reference to FIG. 12 and FIG. 13, the data transmission process in the first manner is described by taking the terminal device as a STA and the coordinated network device including one AP and two APs as examples.

As shown in FIG. 12, the following steps may be included.

In step 1: the STA sends a first data frame to a target AP and a coordinated AP, and waits for a first duration.

After that, the target AP fails to receive data, but the coordinated AP succeeds. Then, the target AP does not send ACK to the STA or the coordinated AP, and the coordinated AP does not receive the ACK from the target AP within the second duration, then it is considered that the target AP fails to receive.

In step 2: the coordinated AP forwards the first data frame to the target AP and clears the backup data in the buffer area.

In step 3: after receiving the first data frame correctly, a successful reception indication of the first data frame is included by the target AP in a downlink data frame that is subsequently sent to the STA. Further, the STA starts the next round of transmission.

As shown in FIG. 13, the following steps may be included.

In step 1: the STA sends the first data frame to the target AP, the coordinated AP1 and the coordinated AP2, and waits for the first duration.

After that, the target AP fails to receive the data, and the coordinated AP1 and the coordinated AP2 receive the data successfully. Then the target AP does not send an ACK to the STA or any coordinated AP, and the coordinated AP1 and the coordinated AP2 do not receive the ACK from the target AP within the second duration, then it is considered that the target AP fails to receive.

In step 2: the coordinated AP1 and the coordinated AP2 forward the first data frame to the target AP.

In step 3: after receiving the first data frame successfully, the target AP includes an indication of successful reception of the first data frame in the subsequent downlink data frame sent to the STA. Further, the STA starts the next round of transmission.

Case 3: Neither the target network device nor all coordinated network devices successfully receive the first data frame.

In this case, if the terminal device cannot receive the ACK or the downlink data frame containing the reception success indication sent by the target network device within the first duration, the first data frame is retransmitted.

With reference to FIG. 14 and FIG. 15, the data transmission process in Case 3 is described by taking the terminal device as a STA and the coordinated network device including one AP and two APs as examples.

As shown in FIG. 14, the following steps may be included.

In step 1: the STA sends a data frame to the target AP and the coordinated AP, and the target AP fails to receive, and the coordinated AP also fails to receive. The target AP does not send ACK to the STA or the coordinated AP, and the coordinated AP will not forward data to the target AP due to the failure of reception.

In step 2: if the STA cannot receive the ACK or the downlink data frame containing the reception success indication sent by the target AP within the first duration, the STA retransmits the data frame, that is, sends the first data frame to the target AP and the coordinated AP again.

As shown in FIG. 15, the following steps may be included.

In step 1: the STA sends the first data frame to the target AP, the coordinated AP1 and the coordinated AP2, and the target AP fails to receive, and all the coordinated APs fail to receive. The target AP does not send ACK to the STA or the coordinated APs, and the coordinated APs will not forward data to the target AP due to the failure of reception.

In step 2: if the STA cannot receive the ACK or the downlink data frame containing the reception success indication sent by the target AP within the first duration, the STA retransmits the data frame, that is, sends the first data frame to the target AP and all coordinated APs again.

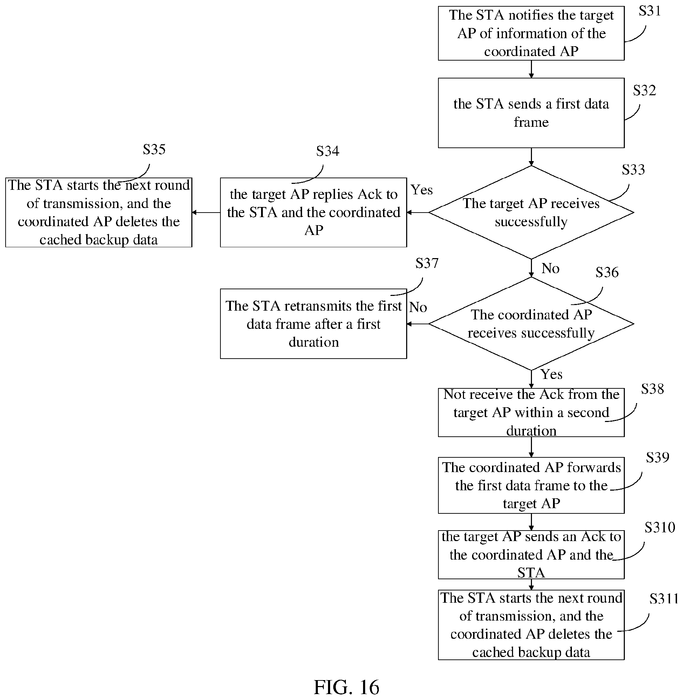

Hereinafter, with reference to FIGs. 16-18, the overall flow of the aforementioned three feedback manners will be described.

FIG. 16 is an overall flow chart of the first explicit ACK feedback manner. As shown in FIG. 16, the following steps are included.

In S31, the STA notifies the target AP of information of the coordinated AP, which corresponds to step S301 in the foregoing.

In S32, the STA sends a first data frame to the target AP and the coordinated AP, where a relay frame field in a frame control field of the first data frame takes a value of 1, indicating that the first data frame is transmitted in a joint transmission manner.

In S33, the target AP determines whether the first data frame is successfully received.

If the reception is successful, S34 is performed, otherwise, S36 is performed.

In S34, the target AP replies ACK to the STA and the coordinated AP.

In S35, the STA starts the next round of transmission, and the coordinated AP deletes the cached backup data.

In S36, the coordinated AP determines whether the first data frame is successfully received.

If not, S37 is performed, and if yes, S38 is performed.

In S37, if the STA does not receive the ACK of the target AP after the first duration, it retransmits the first data frame.

In S38, the coordinated AP does not receive the ACK of the target AP within the second duration.

In S39, the coordinated AP forwards the first data frame to the target AP.

In S310, after successfully receiving the first data frame, the target AP sends an ACK to the coordinated AP and the STA.

In S311, the STA starts the next round of transmission, and the coordinated AP deletes the buffered backup data of the first data frame.

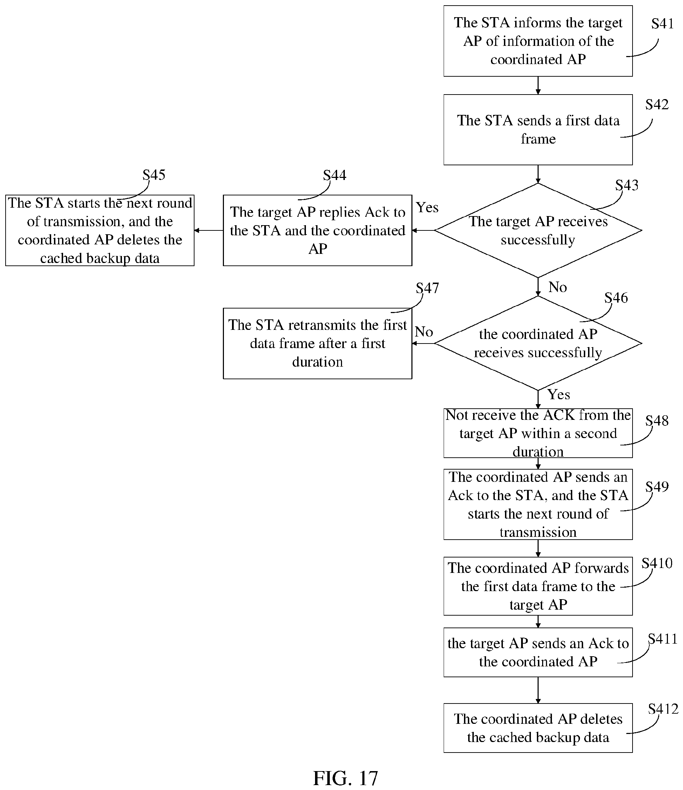

FIG. 17 is an overall flow chart of the second explicit ACK feedback manner. As shown in FIG. 17, the following steps are included.

In S41, the STA informs the target AP of information of the coordinated AP, which corresponds to step S301 in the foregoing.

In S42, the STA sends a first data frame to the target AP and the coordinated AP, where the relay frame field in the frame control field of the first data frame takes a value of 1, indicating that the first data frame is transmitted in a joint transmission manner.

In S43, the target AP determines whether the first data frame is successfully received.

If the reception is successful, S44 is performed, otherwise, S46 is performed.

In S44, the target AP replies ACK to the STA and the coordinated AP.

In S45, the STA starts the next round of transmission, and the coordinated AP deletes the cached backup data.

In S46, the coordinated AP determines whether the first data frame is successfully received.

If not, S47 is performed, and if yes, S48 is performed.

In S47, if the STA does not receive the ACK of the target AP after the first duration, it retransmits the first data frame.

In S48, the coordinated AP does not receive the ACK of the target AP within the second duration.

In S49, the coordinated AP sends an ACK to the STA, and the STA starts the next round of transmission.

In S410, the coordinated AP forwards the first data frame to the target AP.

In S411, after successfully receiving the first data frame, the target AP sends an ACK to the coordinated AP.

In S412, the coordinated AP deletes the buffered backup data of the first data frame.

FIG. 18 is an overall flow chart of the implicit ACK feedback manner. As shown in FIG. 18, the following steps are included.

In S51, the STA informs the target AP of the information of the coordinated AP, which corresponds to step S301 in the foregoing.

In S52, the STA sends a first data frame to the target AP and the coordinated AP, where the relay frame field in the frame control field of the first data frame takes a value of 1, indicating that the first data frame is transmitted in a joint transmission manner.

In S53, the target AP determines whether the first data frame is successfully received.

If the reception is successful, S54 is performed, otherwise S56 is performed.

In S54, the target AP replies ACK to the STA and the coordinated AP.

In S55, the STA starts the next round of transmission, and the coordinated AP deletes the cached backup data.

In S56, the coordinated AP determines whether the first data frame is successfully received.

If not, S57 is performed, and if yes, S58 is performed.

In S57, if the STA does not receive the ACK of the target AP after the first duration, it retransmits the first data frame.

In S58, the coordinated AP does not receive the ACK of the target AP within the second duration.

In S59, the coordinated AP forwards the first data frame to the target AP.

In S510, after the target AP successfully receives the first data frame, the downlink data frame subsequently sent to the STA includes an indication that the first data frame is successfully received.

In S511, the STA ends waiting, or continues to receive a downlink data frame or ends receiving the downlink data frame. In the related art, when the STA at the cell edge of the AP1 sends data to the AP1, but the AP1 fails to receive the data, the AP1 will request the STA to retransmit the data. However, in the embodiments of the present application, since the STA is in the overlapping service set, when sending the data to the AP1, the STA can also send the data to the AP2 in the adjacent service set as a backup, and use the AP2 as a coordinated AP. When the target AP fails to receive, the STA does not need to retransmit, because due to uplink interference, even if the data is retransmitted again, it may fail. Instead, the coordinated AP forwards the received backup data from the STA to the target AP, in this process, the coordinated AP acts as a relay, realizes data forwarding to the target AP, and improves the accuracy of uplink data reception.

The method embodiments of the present application are described in detail above with reference to FIGS. 2 to 22, and the apparatus embodiments of the present application are described in detail below with reference to FIGS. 23 to 33. It should be understood that the apparatus embodiments and method embodiments correspond to each other, and are similar to each other. For the similar description, the method embodiments may be referred to.

Hereinafter, with reference to FIG. 23 to FIG. 25, the terminal device, the target network device, and the coordinated network device according to the embodiments of the present application will be described from the perspective of functional entities.

FIG. 23 is a schematic block diagram of functional entities included in a target network device. As shown in FIG. 23, the target network device may include: an original data processing entity 2310 and a backup data processing entity 2320.

The original data processing entity 2310 includes: a data receiving module 2311 and a data confirming module 2312. The data receiving module 2311 is configured to receive and identify whether the data frame sent from the terminal device indicates that the joint transmission function is enabled (i.e., the first indication information in the foregoing), and is configured to receive information of the coordinated AP sent by the terminal device. It may also be configured to identify the feedback manner indicated by the terminal device (i.e., the second indication information). The data confirming module 2312 is configured to determine whether the data is received successfully, for example, if the data is received successfully, send an ACK to the terminal device and the coordinated network device to confirm the successful reception, otherwise, not send ACK.

The backup data processing entity 2320 includes: a backup data receiving module 2321, a first verification processing module 2322 and a second verification processing module 2323. The backup data receiving module 2321 is configured to receive the backup data forwarded from the coordinated network device. The first verification processing module is configured to send an ACK indicating successful data reception to the coordinated network device and the terminal device in an explicit ACK feedback manner. The second verification processing module is configured to include a reception success indication in the downlink data frame sent to the terminal device by adopting an implicit ACK feedback manner.

FIG. 24 is a schematic block diagram of functional entities included in a coordinated network device. As shown in FIG. 24, the coordinated network device may include: a first coordinated group management entity 2410, an original data processing entity 2420 and a backup data processing entity 2430.

Among them, the first coordinated group management entity 2410 includes a request frame receiving module 2411 and a response frame sending module 2412, the request frame receiving module 2411 is configured to receive a Probe Request frame sent from the terminal device, and the response frame sending module 2412 is configured to send a Probe Response frame to the terminal device.

The original data processing entity 2420 includes: a data receiving module 2421, a data confirming module 2422, a waiting time response module 2423 and a data buffering module 2424, where the data receiving module 2421 is configured to receive and identify whether the data frame sent from the terminal device indicates to enable the joint transmission function. The data confirming module 2422 is configured to determine whether the data is received successfully. The waiting time response module 2423 is configured to wait for the second duration after confirming that the data is successfully received and stored in the buffer area. The data buffering module 2422 is configured to clear the backup data in the buffer if the ACK from the target network device is received within the second duration.

The backup data processing entity 2430 includes a backup data forwarding module 2431, configured to send the backup data to the target network device if the ACK from the target network device is not received within the second duration.

FIG. 25 is a schematic block diagram of functional entities included in a terminal device. As shown in FIG. 25, the terminal device may include: a second coordinated group management entity 2510 and a data transmission function entity 2520.

The second coordinated group management entity 2510 includes a request frame sending module 2511, a response frame receiving module 2512 and a coordinated group recording module 2513. Among them, the request frame sending module 2511 is configured to send a Probe Request frame to detect surrounding network devices with joint transmission function. The response frame receiving module 2512 is configured to receive the Probe Response frame sent by the network device. The coordinated group recording module 2513 is configured to record the BSSID that can be used as the coordinated network device.

The data transmission function entity 2520 includes a coordinated group notification module 2521, a data sending module 2522 and a waiting time response module 2523. The coordinated group notification module 2521 is configured to send an Announce frame to the target network device, in which the BSSID information of one or more coordinated network devices in the joint transmission group is recorded. The data sending module 2522 is configured to send a data frame including information indicating to enable the joint transmission function. The waiting time response module 2523 waits for a first duration after the data sending module 2522 has sent the data frame. If an ACK or a downlink data frame containing a successful reception indication is received within this time period, the waiting is ended, or it is allowed to continue to send or end the transmission of the frame sequence.

The implementation process of the embodiments of the present application is described below from the perspective of the functional entities of the STA, the target AP, and the coordinated AP.

In step 1: the STA in the overlapping signal area (OBSS) determines that the uplink joint transmission function needs to be enabled to ensure that the next uplink data is sent successfully. In order to confirm whether there are nearby APs that can perform joint transmission, the STA sends a Probe Request frame through the request frame sending module of the second coordinated group management entity to detect the APs that have the joint transmission function enabled. The Probe Request frame contains a Relay Discovery element, and the Relay Discovery field records a transmission requirement parameter, such as a delay requirement, channel utilization information, a minimum transmission rate, etc. Then step 2 is performed.

In step 2: the AP with the joint transmission function enabled receives the Probe Request frame from the STA through the request frame receiving module of the first coordinated group management entity and determines that the transmission meets the transmission requirement in the Probe Request frame, which means that the AP is qualified to be the coordinated AP in the joint transmission group. Then, the AP may send a Probe Response frame through the response frame sending module of the first coordinated group management entity, and the Probe Response frame includes a Relay Discovery element, and the Relay Discovery field includes the transmission capability parameter of the AP. Optionally, in some scenarios, if the AP does not provide the function of the coordinated AP, the Information Not Available field in the Relay Discovery element is set to be 1, and if the AP can provide the function of the coordinated AP, the Information Not Available field is set to be 0. Then step 3 is performed.

In step 3: after the response frame receiving module of the second coordinated group management entity of the STA receives the probe response frames sent by one or more APs, the STA determines that there are APs around it that can forward data as the coordinated APs, then the coordinated group recording module of the STA records the BSSID of the available AP. So far, the establishment of the joint transmission group is completed, and subsequent joint transmission can be started. Then step 4 is performed.

In step 4: before sending the data, the STA sends an Announce frame to the target AP through the coordinated group notification module of the data transmission function entity, where the Reported BSSID field records the BSSID information of one or more coordinated APs in the joint transmission group. Then step 5 is performed.

In step 5: the STA sends a data frame in which the Relayed Frame field in the Frame Control field is equal to 1 and the ACK Policy field in the Frame Control field is equal to 0 or 1 to the target AP and the coordinated AP through the data sending module of the data transmission function entity. Among them, the Relayed Frame field being equal to 1 indicates that the joint transmission function is enabled, the ACK Policy field being equal to 0 indicates that the explicit ACK reply method is used, and the ACK Policy field being equal to 1 indicates that the implicit ACK feedback manner is used. The STA needs to wait for a first duration after sending data, and the length of this time period may be set by the waiting time response module in the data transmission function entity. After the data receiving module in the original data processing entity of the coordinated AP receives the data frame, step 6 is performed. Step 7 is performed after the data receiving module in the original data processing entity of the target AP receives the data frame.

In step 6: when the data receiving module in the original data processing entity of the coordinated AP receives the data frame in which the Relayed Frame field in the Frame Control field is equal to 1, the joint transmission function is enabled, and a sending address of the data frame is identified as the BSSID of the target AP. After that, it is determined whether the reception is successful through the data confirming module. If the reception fails, the data frame is deleted and the data frame is not forwarded to the target AP, and then step 15 is performed; if the reception is successful, the data frame is stored in the data buffer module, and then steps 8 and 9 are performed.

In step 7: when the data receiving module in the original data processing entity of the target AP receives the data frame in which the Relayed Frame field in the Frame Control field is equal to 1, the joint transmission function is enabled, and the sending address of the data frame is identified as the BSSID of the target AP. After that, it is determined whether the reception is successful through the data confirming module. If the reception is successful, ACK is sent to all coordinated APs and ACK is sent to the STA according to the BSSID of the coordinated AP obtained in step 4, and then step 8 and step 16 are performed; if not received successfully, then ACK is not sent, and step 9 is performed.

In step 8: after the waiting time response module of the coordinated AP receives the ACK sent by the target AP within the second duration, the backup data in the data buffer module is cleared, and then step 16 is performed.

In step 9: if the waiting time response module of the coordinated AP does not receive the ACK sent by the target AP within the second duration, then the data is forwarded to the target AP through the backup data forwarding module in the backup data processing entity, and the RTS/CTS mechanism can be used during forwarding to protect the forwarded data frames. If the ACK Policy field in the Frame Control field in the forwarded data frame is equal to 1, it means that the implicit ACK feedback manner is used for this transmission, and the coordinated AP clears the backup data in the data cache module after forwarding. Then step 10 is performed.

In step 10: the target AP receives the backup data forwarded by the coordinated AP through the backup data receiving module in the backup data processing entity. If the ACK Policy field in the Frame Control field in the data frame is equal to 0, the explicit ACK feedback manner is used, and then step 11 is performed; if the ACK Policy field in the Frame Control field in the data frame is equal to 1, the implicit ACK feedback manner is adopted, and then step 12 is performed.

In step 11: the target AP sends an ACK indicating successful data reception to the coordinated AP and the STA through the first verification processing module, and then steps 13 and 14 are performed.

In step 12: the target AP includes a reception success indication in the downlink data frame subsequently sent to the STA through the second verification processing module, and then step 14 is performed.

In step 13: after receiving the ACK sent by the target AP, the coordinated AP clears the backup data in the data cache module, and then step 16 is performed.

In step 14: the STA receives the ACK sent by the target AP or receives the downlink data frame including the reception success indication, and then step 16 is performed.

In step 15: if the waiting time response module of the STA in the data transmission function entity does not receive the ACK sent from the target AP or the downlink data including the reception success indication within the first duration, the data frame is retransmitted and step 5 is executed.

In step 16: if the STA still has data to transmit, it starts the next round of transmission and executes step 5, otherwise, the joint transmission ends.

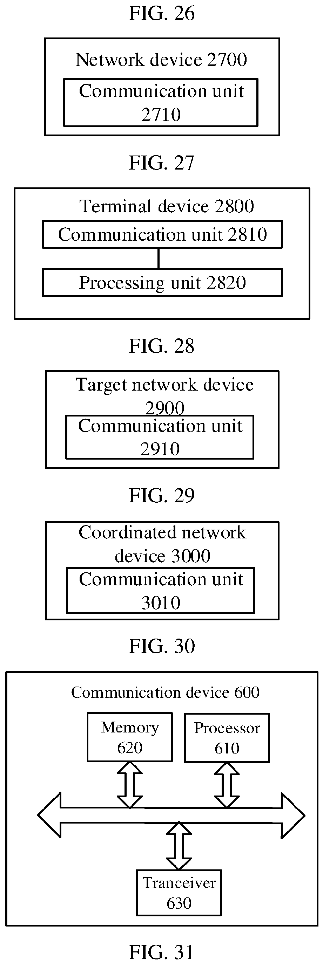

FIG. 26 shows a schematic block diagram of a terminal device 400 according to another embodiment of the present application. As shown in FIG. 26, the terminal device 2600 includes:

a communication unit 2610, configured to send a probe request message, where the probe request message is used for detecting a network device around the terminal device that is capable of performing joint transmission; and receive a probe response message sent by at least one network device.

Optionally, the probe request message includes a transmission requirement parameter of the terminal device.

Optionally, the transmission requirement parameter of the terminal device includes at least one of the following: a delay requirement, channel utilization information and a minimum transmission rate.

Optionally, the probe response message includes a transmission capability parameter of the network device, or the probe response message includes unavailable information, where the unavailable information is used for indicating that the network device cannot be used as a coordinated network device for the terminal device.

Optionally, the transmission capability parameter of the network device includes at least one of the following: an uplink transmission rate, channel utilization information, and the number of terminal devices connected to the network device.

Optionally, the terminal device 2600 further includes: a processing unit configured to determine, in the at least one network device, a coordinated network device that can be used for joint transmission according to a message content of the probe response message.

Optionally, the processing unit is specifically configured to: if the probe response message includes the transmission capability parameter of the network device, and the transmission capability parameter of the network device meets the transmission requirement parameter of the terminal device, determine the network device that sends the probe response message as the coordinated network device that can be used for joint transmission; or if the probe response message includes unavailable information, not determine the network device as the coordinated network device that can be used for joint transmission.

Optionally, the terminal device is a station (STA), and the network device is an access point (AP).

Optionally, the STA is in an overlapping basic service set (OBSS).

Optionally, the probe request message is a probe request frame, and the probe response message is a probe response frame.

It should be understood that the terminal device 2600 according to the embodiment of the present application may correspond to the terminal device in the method embodiment of the present application, and the above-mentioned and other operations and/or functions of each unit in the terminal device 2600 are for the purpose of realizing the corresponding process of the terminal device or the STA in FIG. 2 to FIG. 4, respectively, which are not repeated here for the sake of brevity.

FIG. 27 is a schematic block diagram of a network device according to an embodiment of the present application. The network device 2700 of FIG. 27 includes:
a communication unit 2710, configured to receive a probe request message sent by a terminal device, where the probe request message is used for detecting a network device around the terminal device that is capable of performing joint transmission, where the probe request message includes a transmission requirement parameter of the terminal device; if the network device meets the transmission requirement parameter of the terminal device, send a probe response message to the terminal device.

Optionally, the probe request message includes a transmission requirement parameter of the terminal device.

Optionally, the transmission requirement parameter of the terminal device includes at least one of the following: a delay requirement, channel utilization information and a minimum transmission rate.

Optionally, the probe response message includes a transmission capability parameter of the network device.

Optionally, the transmission capability parameter of the network device includes at least one of the following: an uplink transmission rate, channel utilization information, and the number of terminal devices connected to the network device.

Optionally, the communication unit 2710 is further configured to: if the network device does not meet the transmission requirement parameter of the terminal device, not reply a probe response message, or reply a probe response message including unavailable information; or, if the network device has acted as a coordinated network device for joint transmission of other terminal device, not reply a probe response message, or reply a probe response message including unavailable information; where the unavailable information is used for indicating the network device cannot be used as a coordinated network device for the terminal device.

Optionally, the terminal device is a station (STA), the network device is an access point (AP), the probe request message is a probe request frame, and the probe response message is a probe response frame.

Optionally, the STA is in an overlapping basic service set (OBSS).

It should be understood that the network device 2700 according to the embodiment of the present application may correspond to the network device in the method embodiment of the present application, and the above-mentioned and other operations and/or functions of each unit in the coordinated network device 2700 are for the purpose of realizing the corresponding process of the network device in FIG. 2 to FIG. 4, which are not repeated here for brevity.

FIG. 28 shows a schematic block diagram of a terminal device 400 according to another embodiment of the present application. As shown in FIG. 26, the terminal device 2800 includes:
a communication unit 2810, configured to send a first data frame to a target network device and at least one coordinated network device, where the coordinated network device is used for joint transmission of the first data frame;
the processing unit 2820 is configured to determine whether to retransmit the first data frame according to a feedback of the target network device and/or a feedback of the coordinated network device.

Optionally, the first data frame includes first indication information, where the first indication information is used for indicating that the first data frame is transmitted in a joint transmission manner.

Optionally, the first indication information is included in a relay field in a frame control field of the first data frame.

Optionally, the processing unit 2820 is specifically configured to: if the terminal device receives an acknowledgment (ACK) fed back by the target network device within a first duration, not retransmit the data frame; or
if the terminal device does not receive the ACK fed back by the target network device within the first duration, retransmit the first data frame.

Optionally, the processing unit 2820 is further configured to: if the terminal device receives a second data frame sent by the target network device within a first duration, and the second data frame includes indication information indicating that the first data frame is successfully received, not retransmit the first data frame; or, if the terminal device does not receive a downlink data frame including indication information indicating that the first data frame is successfully received sent by the target network device within a first duration, retransmit the first data frame.

Optionally, the processing unit 2820 is further configured to: if the terminal device receives the ACK fed back by the coordinated network device within the first duration, not retransmit the data frame.

Optionally, the communication unit 2810 is further configured to: send a notification message to the target network device, where the notification message is used for notifying the target network device of information of the coordinated network device used for joint transmission.

Optionally, the notification message is an announcement frame.

Optionally, the first data frame includes second indication information, where the second indication information is used for indicating a feedback manner of the first data frame.

Optionally, the feedback manner is one of the following: in the case of successful reception, the ACK is fed back, and in the case of the reception failure, there is no feedback; in the case of successful reception, the downlink data frame carries the reception success indication, in the case of failure to receive, there is no feedback.

Optionally, the terminal device is a station (STA), the target network device is an access point (AP), and the coordinated network device is an AP.

Optionally, the STA is in an overlapping basic service set (OBSS).

It should be understood that the terminal device 2800 according to the embodiment of the present application may correspond to the terminal device in the method embodiment of the present application, and the above-mentioned and other operations and/or functions of each unit in the terminal device 2800 are for the purpose of realizing the corresponding processes of the terminal device or the STA in FIG. 5 to FIG. 22, respectively, which are not repeated here for the sake of brevity.

FIG. 29 is a schematic block diagram of a target network device according to an embodiment of the present application. The target network device 2900 in FIG. 29 includes: a communication unit 2910, configured to receive a first data frame sent by a terminal device, where the first data frame includes first indication information, and the first indication information is used for indicating that the first data frame is transmitted in a joint transmission manner; and
perform the joint transmission of the first data frame by at least one coordinated network device.

Optionally, the first indication information is included in a relay field in a frame control field of the first data frame.

Optionally, the first data frame includes second indication information, where the second indication information is used for indicating a feedback manner of the first data frame.

Optionally, the second indication information is used for indicating: in the case of successful reception, the ACK is fed back, and in the case of the reception failure, no feedback is given.

Optionally, the communication unit 2910 is further configured to: if the target network device correctly receives the first data frame, send an ACK to the terminal device; or, if the target network device correctly receives the first data frame frame, send ACK to the terminal device and all coordinated network devices; or, if the target network device does not correctly receive the first data frame, not perform feedback.

Optionally, the second indication information is used for indicating: in the case of successful reception, the downlink data frame carries the reception success indication, and in the case of failure in reception, no feedback is given.

Optionally, the communication unit 2910 is further configured to: if the target network device correctly receives the first data frame, send a second data frame to the terminal device, where the second data frame includes indication information indicating that the first data frame is successfully received; or, if the target network device does not correctly receive the first data frame, not perform feedback.

Optionally, the communication unit 2910 is further configured to send a negative acknowledgment (NACK) to the at least one coordinated network device if the target network device does not correctly receive the first data frame.

Optionally, the communication unit 2910 is further configured to: receive the first data frame forwarded by at least one coordinated network device, where the at least one coordinated network device is a coordinated network device that correctly receives the first data frame.

Optionally, the communication unit 2910 is further configured to: receive a notification message sent by the terminal device, where the notification message is used for notifying the target network device of information of the coordinated network device used for joint transmission.

Optionally, the notification message is an announcement frame.

It should be understood that the target network device 2900 according to the embodiment of the present application may correspond to the target network device in the method embodiment of the present application, and the above-mentioned and other operations and/or functions of each unit in the coordinated network device 2900 are respectively for the purpose of realizing the corresponding processes of the target network device or the target AP in the embodiments shown in FIG. 5 to FIG. 22, which are not repeated here for brevity.

FIG. 30 is a schematic block diagram of a coordinated network device according to an embodiment of the present application. The coordinated network device 3000 in FIG. 30 includes: a communication unit configured to receive a first data frame sent by a terminal device, where the first data frame includes first indication information, and the first indication information is used for indicating that the first data frame is transmitted by joint transmission;
perform joint transmission of the first data frame.

Optionally, the communication unit 3010 is further configured to: according to the reception of the first data frame by the target network device of the first data frame and/or the reception of the first data frame by the coordinated network device, perform joint transmission of the first data frame.

Optionally, the coordinated network device 3000 further includes: a processing unit, configured to clear the cached first data frame if the coordinated network device receives the first ACK sent by the target network device within a second duration, where the first ACK is a feedback to the first data frame sent by the terminal device.

Optionally, the communication unit 3010 is further configured to: if the coordinated network device successfully receives the first data frame and does not receive the first ACK sent by the target network device within the second duration, forward the first data frame to the target network device, where the first ACK is a feedback to the first data frame sent by the terminal device.

Optionally, the communication unit 3010 is further configured to: receive a second ACK sent by the target network device, where the second ACK is a feedback of the target network device to the first data frame forwarded by the coordinated network device;

The coordinated network device 3000 further includes: a processing unit configured to clear the cached first data frame.

Optionally, the communication unit 3010 is further configured to: if the coordinated network device successfully receives the first data frame and does not receive the ACK sent by the target network device within a second duration, send ACK to the terminal device; and forward the first data frame to the target network device.

Optionally, the communication unit 3010 is further configured to: if the coordinated network device fails to receive the first data frame, not perform feedback.

Optionally, the terminal device is a station (STA), and the coordinated network device is an AP.

Optionally, the STA is in an overlapping basic service set (OBSS).

It should be understood that the coordinated network device 3000 according to the embodiment of the present application may correspond to the coordinated network device in the method embodiment of the present application, and the above-mentioned and other operations and/or functions of each unit in the coordinated network device 3000 are for the purpose of realizing the corresponding processes of the coordinated network device or the coordinated AP in the embodiments shown in FIG. 5 to FIG. 22, which are not repeated here for brevity.

Optionally, in some embodiments of the present application, the above-mentioned communication unit may be a communication interface or a transceiver, or an input/output interface of a communication chip or a system-on-chip. The aforementioned processing unit may be one or more processors.

FIG. 31 is a schematic structural diagram of a communication device 600 provided by an embodiment of the present application. The communication device 600 shown in FIG. 31 includes a processor 610, and the processor 610 can call and run a computer program from a memory, so as to implement the methods in the embodiments of the present application.

Optionally, as shown in FIG. 31, the communication device 600 may further include a memory 620. The processor 610 may call and run a computer program from the memory 620 to implement the methods in the embodiments of the present application. The memory 620 may be a separate device independent of the processor 610, or may be integrated in the processor 610.

Optionally, as shown in FIG. 31, the communication device 600 may further include a transceiver 630, and the processor 610 may control the transceiver 630 to communicate with other device(s), specifically, may send information or data to other device(s), or receive information or data sent by other device(s). Among them, the transceiver 630 may include a transmitter and a receiver. The transceiver 630 may further include antennas, and the number of the antennas may be one or more.

Optionally, the communication device 600 may specifically be the network device in the embodiments of the present application, and the communication device 600 may implement the corresponding processes implemented by the network device in each method in the embodiments of the present application. For the sake of brevity, details are not repeated here.

Optionally, the communication device 600 may specifically be the mobile terminal/terminal device of the embodiments of the present application, and the communication device 600 may implement the corresponding processes implemented by the mobile terminal/terminal device in each method of the embodiments of the present application, which are not repeated here for the sake of brevity.

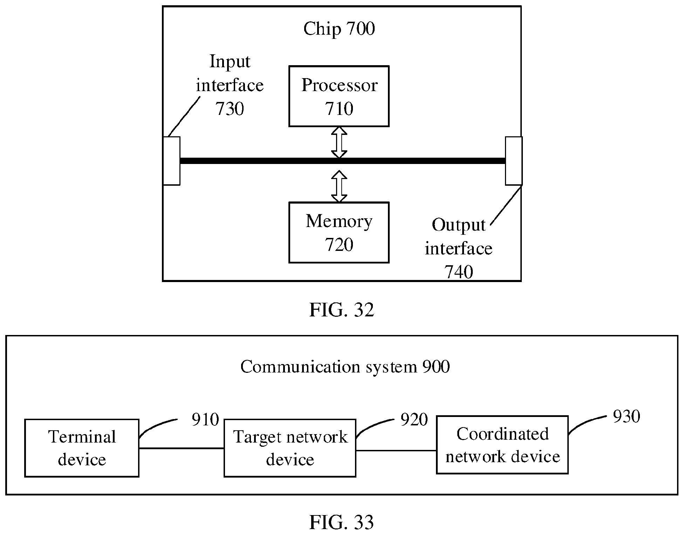

FIG. 32 is a schematic structural diagram of a chip according to an embodiment of the present application. The chip 700 shown in FIG. 32 includes a processor 710, and the processor 710 can call and run a computer program from a memory, so as to implement the methods in the embodiments of the present application.

Optionally, as shown in FIG. 32, the chip 700 may further include a memory 720. The processor 710 may call and run a computer program from the memory 720 to implement the methods in the embodiments of the present application. The memory 720 may be a separate device independent of the processor 710, or may be integrated in the processor 710.

Optionally, the chip 700 may further include an input interface 730. The processor 710 may control the input interface 730 to communicate with other devices or chips, and specifically, may acquire information or data sent by other devices or chips. Optionally, the chip 700 may further include an output interface 740. The processor 710 can control the output interface 740 to communicate with other devices or chips, and specifically, can output information or data to other devices or chips.

Optionally, the chip can be applied to the network device in the embodiments of the present application, and the chip can implement the corresponding processes implemented by the network device in each method of the embodiments of the present application, which is not repeated here for brevity.

Optionally, the chip can be applied to the mobile terminal/terminal device in the embodiments of the present application, and the chip can implement the corresponding processes implemented by the mobile terminal/terminal device in each method of the embodiments of the present application, which is not repeated here for brevity.

It should be understood that the chip mentioned in the embodiments of the present application may also be referred to as a system-level chip, a system chip, a chip system, or a system-on-chip, or the like.

FIG. 33 is a schematic block diagram of a communication system 900 provided by an embodiment of the present application. As shown in FIG. 32, the communication system 900 includes a terminal device 910, a target network device 920 and a coordinated network device 930.

The terminal device 910 may be used to implement the corresponding functions implemented by the terminal device or the STA in the above methods, the target network device 920 may be used to implement the corresponding functions implemented by the target network device or the target AP in the above methods, and the coordinated network device 930 may be used to implement the corresponding functions implemented by the coordinated network device or the coordinated AP in the above methods, which are not elabrated here for brevity.

It should be understood that the processor in the embodiment of the present application may be an integrated circuit chip, which has a signal processing capability. In the implementation process, each step of the above method embodiments may be completed by a hardware integrated logic circuit or an instruction in the form of software in a processor. The above-mentioned processor can be a general-purpose processor, a Digital Signal Processor (DSP), an Application Specific Integrated Circuit (ASIC), an Field Programmable Gate Array (FPGA) or other available programming logic devices, discrete gates or transistor logic devices, discrete hardware components. The methods, steps, and logic block diagrams disclosed in the embodiments of the present application can be implemented or executed. The general-purpose processor may be a microprocessor or the processor may be any conventional processor or the like. The steps of the methods disclosed in conjunction with the embodiments of the present application may be directly embodied as executed by a hardware decoding processor, or executed by a combination of hardware and software modules in the decoding processor. The software module may be located in a random access memory, a flash memory, a read-only memory, a programmable read-only memory or an electrically erasable programmable memory, a register and other storage media mature in the art. The storage medium is located in the memory, and the processor reads the information in the memory, and completes the steps of the above methods in combination with its hardware.

It can be understood that the memory in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EPROM) or a flash memory. The volatile memory may be a Random Access Memory (RAM), which acts as an external cache. By way of illustration and not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but not be limited to, these and any other suitable types of memory.

It should be understood that the above memories are examples but not a limitative description. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM) and so on. That is, the memory in the embodiments of the present application is intended to include but not limited to these and any other suitable types of memory.

Embodiments of the present application further provide a computer-readable storage medium for storing a computer program.

Optionally, the computer-readable storage medium may be applied to the target network device or the coordinated network device in the embodiments of the present application, and the computer program enables the computer to execute the corresponding processes implemented by the target network device or the coordinated network device in the various methods of the embodiments of the present application, which are not repeated here for brevity.

Optionally, the computer-readable storage medium may be applied to the mobile terminal/terminal device in the embodiments of the present application, and the computer program enables the computer to execute the corresponding processes implemented by the mobile terminal/terminal device in the various methods of the embodiments of the present application, which are not repeated here for brevity.

Embodiments of the present application also provide a computer program product, including computer program instructions.

Optionally, the computer program product may be applied to the target network device or the coordinated network device in the embodiments of the present application, and the computer program instructions cause the computer to execute the corresponding processes implemented by the target network device or the coordinated network device in the various methods of the embodiments of the present application, which are not repeated here for brevity.

Optionally, the computer program product may be applied to the mobile terminal/terminal device in the embodiments of the present application, and the computer program instructions cause the computer to execute the corresponding processes implemented by the mobile terminal/terminal device in the various methods of the embodiments of the present application, which are not repeated here for brevity.

Embodiments of the present application also provide a computer program.

Optionally, the computer program may be applied to the target network device or the coordinated network device in the embodiments of the present application, and when the computer program is run on the computer, the computer is caused to execute the corresponding processes implemented by the target network device or the coordinated network device in the various methods of the embodiments of the present application, which are not repeated here for brevity.

Optionally, the computer program may be applied to the mobile terminal/terminal device in the embodiments of the present application, and when the computer program is run on the computer, the computer is caused to execute the corresponding processes implemented by the mobile terminal/terminal device in the various methods of the embodiments of the present application, which are not repeated here for brevity.

Those of ordinary skill in the art can realize that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Skilled artisans may implement the described functionality using different methods for each particular application, but such implementations should not be considered beyond the scope of the present application.

Those skilled in the art can clearly understand that, for the convenience and brevity of description, the specific working process of the above-described systems, apparatuses and units may refer to the corresponding processes in the foregoing method embodiments, which will not be repeated here.

In the several embodiments provided in the present application, it should be understood that the disclosed system, apparatus and method may be implemented in other manners. For example, the apparatus embodiments described above are only illustrative. For example, the division of the units is only a logical function division. In actual implementation, there may be other division methods. For example, multiple units or components may be combined or may be integrated into another system, or some features can be ignored, or not implemented. On the other hand, the shown or discussed mutual coupling or direct coupling or communication connection may be indirect coupling or communication connection through some interfaces, apparatuses or units, and may be in electrical, mechanical or other forms.

The units described as separate components may or may not be physically separated, and components displayed as units may or may not be physical units, that is, they may be located in one place, or may be distributed to multiple network units. Some or all of the units may be selected according to actual needs to achieve the purpose of the solution in the present embodiment.

In addition, each functional unit in each embodiment of the present application may be integrated into one processing unit, or each unit may exist physically alone, or two or more units may be integrated into one unit.

The functions, if implemented in the form of software functional units and sold or used as independent products, may be stored in a computer-readable storage medium. Based on this understanding, the essence or the part that contributes to the related art of the technical solution of the present application or the part of the technical solution can be embodied in the form of a software product. The computer software product is stored in a storage medium, including several instructions, which are used to cause a computer device (which may be a personal computer, a server, or a network device, etc.) to execute all or part of the steps of the methods described in the various embodiments of the present application. The aforementioned storage medium includes: a U disk, a mobile hard disk, a Read-Only Memory (ROM), a Random Access Memory (RAM), a magnetic disk or an optical disk, or other media that can store program codes.

The above mentioned are only specific implementations of the present application, but the scope of protection of the present application is not limited thereto. Any person skilled in the art can easily think of variations or substitutions within the technical scope disclosed in the present application, which should be covered by the scope of protection of the present application. Therefore, the scope of protection of the present application shall be stated to be subject to the scope of protection of the claims.

## Claims

1. A joint transmission method, comprising:
sending, by a terminal device, a first data frame to a target network device and at least one coordinated network device, wherein the coordinated network device is used for joint transmission of the first data frame; and
determining, by the terminal device, whether to retransmit the first data frame according to a feedback from the target network device and/or a feedback from the coordinated network device.

2. The method according to claim 1, wherein the first data frame comprises first indication information, and the first indication information is used for indicating that the first data frame is transmitted in a joint transmission manner.

3. The method according to claim 2, wherein the first indication information is comprised in a relay field in a frame control field of the first data frame.

4. The method according to any one of claims 1-3, wherein the determining, by terminal device, whether to retransmit the first data frame according to the feedback of the target network device and/or the feedback of the coordinated network device, comprises:
in response to that the terminal device receives an acknowledgment (ACK) fed back by the target network device within a first duration, not retransmitting the data frame; or
in response to that the terminal device does not receive the ACK fed back by the target network device within the first duration, retransmitting the first data frame.

5. The method according to any one of claims 1-3, wherein the determining, by terminal device, whether to retransmit the first data frame according to the feedback of the target network device and/or the feedback of the coordinated network device, comprises:
in response to that the terminal device receives a second data frame sent by the target network device within a first duration, and the second data frame comprises indication information for indicating that the first data frame is successfully received, not retransmitting the first data frame; or
in response to that the terminal device does not receive a downlink data frame sent by the target network device and comprising indication information indicating that the first data frame is successfully received within the first duration, retransmitting the first data frame.

6. The method according to any one of claims 1-3, wherein the determining, by the terminal device, whether to retransmit the first data frame according to the feedback of the target network device and/or the feedback of the coordinated network device, comprises:
in response to that the terminal device receives an ACK fed back by the coordinated network device within a first duration, not retransmitting the data frame.

7. The method according to any one of claims 1-6, wherein the method further comprises:
sending, by the terminal device, a notification message to the target network device, wherein the notification message is used for notifying the target network device of information of the coordinated network device used for joint transmission.

8. The method according to claim 7, wherein the notification message is an announcement frame.

9. The method according to any one of claims 1-8, wherein the first data frame comprises second indication information, and the second indication information is used for indicating a feedback manner of the first data frame.

10. The method according to claim 9, wherein the feedback manner is one of the following:
in a case of successful reception, ACK is fed back, and in a case of failure in reception, no feedback is performed;
in a case of successful reception, a reception success indication is carried in a downlink data frame, and in a case of failure in reception, no feedback is performed.

11. The method according to any one of claims 1-10, wherein the terminal device is a station (STA), the target network device is an access point (AP), and the coordinated network device is an AP.

12. The method according to claim 11, wherein the STA is in an overlapping basic service set (OBSS).

13. A joint transmission method, comprising:
receiving, by a target network device, a first data frame sent by a terminal device, wherein the first data frame comprises first indication information, and the first indication information is used for indicating that the first data frame is transmitted in a joint transmission manner;
performing, by the target network device, joint transmission of the first data frame through at least one coordinated network device.

14. The method according to claim 13, wherein the first indication information is comprised in a relay field in a frame control field of the first data frame.

15. The method according to claim 13 or 14, wherein the first data frame comprises second indication information, and the second indication information is used for indicating a feedback manner of the first data frame.

16. The method according to claim 15, wherein the second indication information is used for indicating:
in a case of successful reception, an ACK is fed back, and in a case of failure in reception, no feedback is performed.

17. The method according to claim 16, wherein the method further comprises:
in response to that the target network device correctly receives the first data frame, sending, by the target network device, an ACK to the terminal device; or
in response to that the target network device correctly receives the first data frame, sending, by the target network device, an ACK to the terminal device and all coordinated network devices; or
in response to that the target network device does not correctly receive the first data frame, not performing feedback by the target network device.

18. The method according to claim 15, wherein the second indication information is used for indicating: in a case of successful reception, a reception success indication is carried in a downlink data frame, and in a case of failure in reception, no feedback is performed.

19. The method according to claim 18, wherein the method further comprises:
in response to that the target network device correctly receives the first data frame, sending, by the target network device, a second data frame to the terminal device, wherein the second data frame comprises indication information for indicating that the first data frame is successfully received; or
in response to that the target network device does not correctly receive the first data frame, not performing feedback by the target network device.

20. The method according to any one of claims 13-19, wherein the method further comprises:
in response to that the target network device does not correctly receive the first data frame, sending, by the target network device, a negative acknowledgement (NACK) to the at least one coordinated network device.

21. The method according to claim 20, wherein the performing, by the target network device, the joint transmission of the first data frame through at least one coordinated network device, further comprises:
receiving, by the target network device, the first data frame forwarded by at least one coordinated network device, wherein the at least one coordinated network device is a coordinated network device that correctly receives the first data frame.

22. The method according to any one of claims 13-21, wherein the method further comprises:
receiving, by the target network device, a notification message sent by the terminal device, wherein the notification message is used for notifying the target network device of information of the coordinated network device used for joint transmission.

23. The method according to claim 22, wherein the notification message is an announcement frame.

24. A joint transmission method, comprising:
receiving, by a first coordinated network device, a first data frame sent by a terminal device, wherein the first data frame comprises first indication information, and the first indication information is used for indicating that the first data frame is transmitted in a joint transmission manner;
performing, by the first coordinated network device, joint transmission of the first data frame.

25. The method according to claim 24, wherein the performing, by the first coordinated network device, the joint transmission of the first data frame comprises:
performing, by the first coordinated network device, the joint transmission of the first data frame according to a reception situation of the first data frame by a target network device of the first data frame and/or a reception situation of the first data frame by the first coordinated network device.

26. The method according to claim 25, wherein the performing, by the first coordinated network device, the joint transmission of the first data frame according to the reception situation of the first data frame by the target network device of the first data frame and/or the reception situation of the first data frame by the first coordinated network device, comprises:
in response to that the first coordinated network device receives a first ACK sent by the target network device within a second duration, clearing, by the first coordinated network device, cached first data frame, wherein the first ACK is a feedback to the first data frame sent by the terminal device.

27. The method according to claim 25, wherein the performing, by the first coordinated network device, the joint transmission of the first data frame according to the reception situation of the first data frame by the target network device of the first data frame and/or the reception situation of the first data frame by the first coordinated network device, comprises:
in response to that the first coordinated network device successfully receives the first data frame and does not receive a first ACK sent by the target network device within a second duration, forwarding, by the first coordinated network device, the first data frame to the target network device, wherein the first ACK is a feedback to the first data frame sent by the terminal device.

28. The method according to claim 27, wherein the method further comprises:
receiving, by the first coordinated network device, a second ACK sent by the target network device, wherein the second ACK is a feedback of the target network device to the first data frame forwarded by the first coordinated network device;
clearing, by the first coordinated network device, cached first data frame.

29. The method according to claim 25, wherein the performing, by the first coordinated network device, the joint transmission of the first data frame according to the reception situation of the first data frame by the target network device of the first data frame and/or the reception situation of the first data frame by the first coordinated network device, comprises:
in response to that the first coordinated network device successfully receives the first data frame and does not receive an ACK sent by the target network device within a second duration, sending, by the first coordinated network device, an ACK to the terminal device;
forwarding, by the first coordinated network device, the first data frame to the target network device.

30. The method according to claim 25, wherein the performing, by the first coordinated network device, the joint transmission of the first data frame according to the reception situation of the first data frame by the target network device of the first data frame and/or the reception situation of the first data frame by the first coordinated network device, comprises:
in response to that the first coordinated network device fails to receive the first data frame, not performing, by the first coordinated network device, a feedback.

31. The method according to any one of claims 24-30, wherein the terminal device is a station (STA), and the coordinated network device is an AP.

32. The method according to claim 31, wherein the STA is in an overlapping basic service set (OBSS).

33. A joint transmission method, comprising:
sending, by a terminal device, a probe request message, wherein the probe request message is used for detecting a network device around the terminal device that is capable of performing joint transmission;
receiving, by the terminal device, a probe response message sent by at least one network device.

34. The method according to claim 33, wherein the probe request message comprises a transmission requirement parameter of the terminal device.

35. The method according to claim 34, wherein the transmission requirement parameter of the terminal device comprises at least one of: a delay requirement, channel utilization information and a minimum transmission rate.

36. The method according to claim 34 or 35, wherein the probe response message comprises a transmission capability parameter of a network device, or the probe response message comprises unavailable information, and the unavailable information is used for indicating that the network device cannot be used as a coordinated network device for the terminal device.

37. The method according to claim 36, wherein the transmission capability parameter of the network device comprises at least one of: an uplink transmission rate, channel utilization information, and the number of terminal devices connected to the network device.

38. The method according to claim 36 or 37, wherein the method further comprises:
determining, by the terminal device, a coordinated network device available for joint transmission in the at least one network device according to a message content of the probe response message.

39. The method according to claim 38, wherein the determining, by the terminal device, a coordinated network device available for joint transmission in the at least one network device according to the message content of the probe response message, comprises:
in response to that the probe response message comprises the transmission capability parameter of the network device, and the transmission capability parameter of the network device meets the transmission requirement parameter of the terminal device, determining the network device that sends the probe response message as the coordinated network device available for joint transmission; or, in response to that the probe response message comprises the unavailable information, not determining the network device as the coordinated network device available for joint transmission.

40. The method according to any one of claims 33-39, wherein the terminal device is a station (STA), and the network device is an access point (AP).

41. The method according to claim 40, wherein the STA is in an overlapping basic service set (OBSS).

42. The method according to any one of claims 33-41, wherein the probe request message is a probe request frame, and the probe response message is a probe response frame.

43. A joint transmission method, comprising:
receiving, by a network device, a probe request message sent by a terminal device, wherein the probe request message is used for detecting a network device around the terminal device that is capable of performing joint transmission, wherein the probe request message comprises a transmission requirement parameter of the terminal device;
in response to that the network device meets the transmission requirement parameter of the terminal device, sending a probe response message to the terminal device.

44. The method according to claim 43, wherein the probe request message comprises a transmission requirement parameter of the terminal device.

45. The method according to claim 44, wherein the transmission requirement parameter of the terminal device comprises at least one: a delay requirement, channel utilization information and a minimum transmission rate.

46. The method according to any one of claims 43-45, wherein the probe response message comprises a transmission capability parameter of the network device.

47. The method according to claim 46, wherein the transmission capability parameter of the network device comprises at least one of: an uplink transmission rate, channel utilization information, and the number of terminal devices connected to the network device.

48. The method according to any one of claims 43-47, wherein the method further comprises:
in response to that the network device does not meet the transmission requirement parameter of the terminal device, not replying a probe response message or replying a probe response message comprising unavailable information by the network device; or
in response to that the network device has been used as a coordinated network device for joint transmission of other terminal device, not replying a probe response message or repying a probe response message comprising unavailable information by the network device;
wherein the unavailable information is used for indicating that the network device cannot be used as a coordinated network device of the terminal device.

49. The method according to any one of claims 43-48, wherein the terminal device is a station (STA), the network device is an access point (AP), the probe request message is a probe request frame, and the probe response message is a probe response frame.

50. The method according to claim 49, wherein the STA is in an overlapping basic service set (OBSS).

51. A terminal device, comprising:
a communication unit, configured to send a first data frame to a target network device and at least one coordinated network device, wherein the coordinated network device is used for joint transmission of the first data frame;
a processing unit, configured to determine whether to retransmit the first data frame according to a feedback from the target network device and/or a feedback from the coordinated network device.

52. The terminal device according to claim 51, wherein the first data frame comprises first indication information, and the first indication information is used for indicating that the first data frame is transmitted in a joint transmission manner.

53. The terminal device according to claim 52, wherein the first indication information is comprised in a relay field in a frame control field of the first data frame.

54. The terminal device according to any one of claims 51-53, wherein the processing unit is specifically configured to: in response to that the terminal device receives an acknowledgment (ACK) fed back by the target network device within a first duration, not retransmit the data frame; or, in response to that the terminal device does not receive the ACK fed back by the target network device within the first duration, retransmit the first data frame.

55. The terminal device according to any one of claims 51-53, wherein the processing unit is further configured to: in response to that the terminal device receives a second data frame sent by the target network device within a first duration, and the second data frame comprises indication information for indicating that the first data frame is successfully received, not retransmit the first data frame; or in response to that the terminal device does not receive a downlink data frame sent by the target network device and comprising indication information indicating that the first data frame is successfully received within a first duration, retransmit the first data frame.

56. The terminal device according to any one of claims 51-53, wherein the processing unit is further configured to: in response to that the terminal device receives an ACK fed back by the coordinated network device within a first duration, not retransmit the data frame.

57. The terminal device according to any one of claims 51-56, wherein the communication unit is further configured to: send a notification message to the target network device, wherein the notification message is used for notifying the target network device of information of the coordinated network device used for joint transmission.

58. The terminal device according to claim 57, wherein the notification message is an announcement frame.

59. The terminal device according to any one of claims 51-58, wherein the first data frame comprises second indication information, and the second indication information is used for indicating a feedback manner of the first data frame.

60. The terminal device according to claim 59, wherein the feedback manner is one of the following:
in a case of successful reception, ACK is fed back, and in a case of failure in reception, no feedback is performed;
in the case of successful reception, a reception success indication is carried in a downlink data frame, and in a case of failure in reception, no feedback is performed.

61. The terminal device according to any one of claims 51-60, wherein the terminal device is a station (STA), the target network device is an access point (AP), and the coordinated network device is an AP.

62. The terminal device according to claim 61, wherein the STA is in an overlapping basic service set (OBSS).

63. A target network device, comprising:
a communication unit, configured to receive a first data frame sent by a terminal device, wherein the first data frame comprises first indication information, and the first indication information is used for indicating that the first data frame is transmitted in a joint transmission manner;
performing joint transmission of the first data frame through at least one coordinated network device.

64. The target network device according to claim 63, wherein the first indication information is comprised in a relay field in a frame control field of the first data frame.

65. The target network device according to claim 63 or 64, wherein the first data frame comprises second indication information, and the second indication information is used for indicating a feedback manner of the first data frame.

66. The target network device according to claim 65, wherein the second indication information is used for indicating: in a case of successful reception, an ACK is fed back, and in a case of failure in reception, no feedback is performed.

67. The target network device according to claim 66, wherein the communication unit is further configured to: in response to that the target network device correctly receives the first data frame, send an ACK to the terminal device; or, in response to that the target network device correctly receives the first data frame, send an ACK to the terminal device and all coordinated network devices; or, in response to that the target network device does not correctly receive the first data frame, not perform a feedback.

68. The target network device according to claim 65, wherein the second indication information is used for indicating: in a case of successful reception, a reception success indication is carried in a downlink data frame, and in a case of failure in reception, no feedback is performed.

69. The target network device according to claim 68, wherein the communication unit is further configured to:
in response to that the target network device correctly receives the first data frame, send a second data frame to the terminal device, wherein the second data frame comprises indication information for indicating that the first data frame is successfully received; or
in response to that the target network device does not correctly receive the first data frame, not perform a feedback.

70. The target network device according to any one of claims 63-69, wherein the communication unit is further configured to: in response to that the target network device does not correctly receive the first data frame, send a negative acknowledgement (NACK) to the at least one coordinated network device.

71. The target network device according to claim 70, wherein the communication unit is further configured to:
receive the first data frame forwarded by at least one coordinated network device, wherein the at least one coordinated network device is a coordinated network device that correctly receives the first data frame.

72. The target network device according to any one of claims 63-71, wherein the communication unit is further configured to: receive a notification message sent by the terminal device, wherein the notification message is used for notifying the target network device of information of the coordinated network device used for joint transmission.

73. The target network device according to claim 72, wherein the notification message is an announcement frame.

74. A coordinated network device, comprising:
a communication unit, configured to receive a first data frame sent by a terminal device, wherein the first data frame comprises first indication information, and the first indication information is used for indicating that the first data frame is transmitted in a joint transmission manner; and perform joint transmission of the first data frame.

75. The coordinated network device according to claim 74, wherein the communication unit is further configured to:
perform the joint transmission of the first data frame according to a reception situation of the first data frame by a target network device of the first data frame and/or a reception situation of the first data frame by the coordinated network device.

76. The coordinated network device according to claim 75, wherein the coordinated network device further comprises:
a processing unit, configured to clear cached first data frame in response to that the coordinated network device receives a first ACK sent by the target network device within a second duration, wherein the first ACK is a feedback to the first data frame sent by the terminal device.

77. The coordinated network device according to claim 75, wherein the communication unit is further configured to:
in response to that the coordinated network device successfully receives the first data frame and does not receive a first ACK sent by the target network device within a second duration, forward the first data frame to the target network device, wherein the first ACK is a feedback to the first data frame sent by the terminal device.

78. The coordinated network device according to claim 77, wherein the communication unit is further configured to:
receive a second ACK sent by the target network device, wherein the second ACK is a feedback of the target network device to the first data frame forwarded by the coordinated network device;
the coordinated network device further comprises: a processing unit configured to clear cached first data frame.

79. The coordinated network device according to claim 75, wherein the communication unit is further configured to:
in response to that the coordinated network device successfully receives the first data frame and does not receive an ACK sent by the target network device within a second duration, send an ACK to the terminal device; and forward the first data frame to the target network device.

80. The coordinated network device according to claim 75, wherein the communication unit is further configured to:
in response to that the coordinated network device fails to receive the first data frame, not perform a feedback.

81. The coordinated network device according to any one of claims 74-80, wherein the terminal device is a station (STA), and the coordinated network device is an AP.

82. The coordinated network device according to claim 81, wherein the STA is in an overlapping basic service set (OBSS).

83. A terminal device, comprising:
a communication unit, configured to send a probe request message, wherein the probe request message is used for detecting a network device around the terminal device that is capable of performing joint transmission; and receive a probe response message sent by at least one network device.

84. The terminal device according to claim 83, wherein the probe request message comprises a transmission requirement parameter of the terminal device.

85. The terminal device according to claim 84, wherein the transmission requirement parameter of the terminal device comprises at least one of: a delay requirement, channel utilization information and a minimum transmission rate.

86. The terminal device according to claim 84 or 85, wherein the probe response message comprises a transmission capability parameter of a network device, or the probe response message comprises unavailable information, and the unavailable information is used for indicating that the network device cannot be used as a coordinated network device for the terminal device.

87. The terminal device according to claim 86, wherein the transmission capability parameter of the network device comprises at least one of: an uplink transmission rate, channel utilization information, and the number of terminal devices connected to the network device.

88. The terminal device according to claim 86 or 87, wherein the terminal device further comprises:
a processing unit, configured to determine a coordinated network device available for joint transmission in the at least one network device according to a message content of the probe response message.

89. The terminal device according to claim 88, wherein the processing unit is specifically configured to:
in response to that the probe response message comprises the transmission capability parameter of the network device, and the transmission capability parameter of the network device meets the transmission requirement parameter of the terminal device, determine the network device that sends the probe response message as the coordinated network device available for joint transmission; or in response to that the probe response message comprises the unavailable information, not determine the network device as the coordinated network device available for joint transmission.

90. The terminal device according to any one of claims 83-89, wherein the terminal device is a station (STA), and the network device is an access point (AP).

91. The terminal device according to claim 90, wherein the STA is in an overlapping basic service set (OBSS).

92. The terminal device according to any one of claims 83-91, wherein the probe request message is a probe request frame, and the probe response message is a probe response frame.

93. A network device, comprising:
a communication unit, configured to receive a probe request message sent by a terminal device, wherein the probe request message is used for detecting a network device around the terminal device that is capable of performing joint transmission, wherein the probe request message comprises a transmission requirement parameter of the terminal device; and in response to that the network device meets the transmission requirement parameter of the terminal device, send a probe response message to the terminal device.

94. The network device according to claim 93, wherein the probe request message comprises a transmission requirement parameter of the terminal device.

95. The network device according to claim 94, wherein the transmission requirement parameter of the terminal device comprises at least one of: a delay requirement, channel utilization information and a minimum transmission rate.

96. The network device according to any one of claims 93-95, wherein the probe response message comprises a transmission capability parameter of the network device.

97. The network device according to claim 96, wherein the transmission capability parameter of the network device comprises at least one of: an uplink transmission rate, channel utilization information, and the number of terminal devices connected to the network device.

98. The network device according to any one of claims 93-97, wherein the communication unit is further configured to: in response to that the network device does not meet the transmission requirement parameter of the terminal device, not reply a probe response message, or reply a probe response message comprising unavailable information; or in response to that the network device has been used as a coordinated network device for joint transmission of other terminal device, not reply a probe response message, or reply a probe comprising unavailable information; wherein the unavailable information is used for indicating that the network device cannot be used as a coordinated network device of the terminal device.

99. The network device according to any one of claims 93-98, wherein the terminal device is a station (STA), the network device is an access point (AP), the probe request message is a probe request frame, and the probe response message is a probe response frame.

100. The network device of claim 99, wherein the STA is in an overlapping basic service set (OBSS).

101. A terminal device, comprising: a processor and a memory, wherein the memory is configured to store a computer program, and the processor is configured to call and run the computer program stored in the memory, to execute the method according to any one of claims 1 to 12, or the method according to any one of claims 33 to 42.

102. A chip, comprising: a processor for invoking and running a computer program from a memory, so that a device installed with the chip executes the method according to any one of claims 1 to 12, or the method according to any one of claims 33 to 42.

103. A computer-readable storage medium, configured to store a computer program, wherein the computer program causes a computer to execute the method according to any one of claims 1 to 12, or the method according to any one of claims 33 to 42.

104. A computer program product, comprising computer program instructions that cause a computer to perform the method according to any one of claims 1 to 12, or the method according to any one of claims 33 to 42.

105. A computer program, wherein the computer program causes a computer to perform the method according to any one of claims 1 to 12, or the method according to any one of claims 33 to 42.

106. A network device, comprising: a processor and a memory, wherein the memory is configured to store a computer program, and the processor is configured to call and run the computer program stored in the memory, to execute the method according to any one of claims 13 to 23, or the method according to any one of claims 24-32, or the method according to any one of claims 33 to 42.

107. A chip, comprising: a processor for invoking and running a computer program from a memory, so that a device installed with the chip executes the method according to any one of claims 13 to 23, or the method according to any one of claims 24 to 32, or the method according to any one of claims 33 to 42.

108. A computer-readable storage medium, configured to store a computer program, wherein the computer program causes a computer to execute the method according to any one of claims 13 to 23, or the method according to any one of claims 24 to 32, or the method according to any one of claims 33 to 42.

109. A computer program product comprising computer program instructions that cause a computer to perform the method according to any one of claims 13 to 23, or the method according to any one of claims 24 to 32, or the method according to any one of claims 33 to 42.

110. A computer program, wherein the computer program causes a computer to perform the method according to any one of claims 13 to 23, or the method according to any one of claims 24 to 32, or the method according to any one of claims 33 to 42.
